# EUROPEAN PATENT SPECIFICATION

(11) **EP 3 606 198 B1**
(45) Date of publication and mention of the grant of the patent: **22.01.2025**
(21) Application number: 18771227.8
(22) Date of filing: 13.03.2018
(51) Int. Cl.: H04W 68/02, H04W 16/28, H04W 68/00

(54) **PAGING METHOD AND APPARATUS, SENDING END, RECEIVING END, SYSTEM AND STORAGE MEDIUM**
FUNKRUFVERFAHREN UND -VORRICHTUNG, SENDESEITE, EMPFANGSSEITE, SYSTEM UND SPEICHERMEDIUM
PROCÉDÉ ET APPAREIL DE RADIORECHERCHE, EXTRÉMITÉ D'ENVOI, EXTRÉMITÉ DE RÉCEPTION, SYSTÈME, ET SUPPORT DE STOCKAGE

(30) Priority: 22.03.2017 CN 201710174788
(43) Date of publication of application: 05.02.2020
(73) Proprietor: ZTE Corporation, Shenzhen, Guangdong 518057 (CN)
(72) Inventor: BI, Feng, Shenzhen Guangdong 518057 (CN); LIU, Xing, Shenzhen Guangdong 518057 (CN); HAO, Peng, Shenzhen Guangdong 518057 (CN); CHEN, Yuqin, Shenzhen Guangdong 518057 (CN); GOU, Wei, Shenzhen Guangdong 518057 (CN)
(74) Representative: Aipex B.V.
(86) International application number: PCT/CN2018/078893
(87) International publication number: WO 2018/171472

(56) References cited:
- WO-A1-2016/168959
- CN-A- 104 159 298
- US-A1- 2014 248 915
- ERICSSON: "Means and configuration of paging delivery in NR", vol. RAN WG2, no. Spokane, USA; 20170117 - 20170119, 7 January 2017 (2017-01-07), XP051204088, Retrieved from the Internet <URL:http://www.3gpp.org/ftp/tsg_ran/WG2_RL2/TSGR2_AHs/2017_01_NR/Docs/> [retrieved on 20170107]
- MEDIATEK INC: "Paging in NR with Beam Sweeping", vol. RAN WG2, no. Athens, Greece; 20170213 - 20170217, 3 February 2017 (2017-02-03), XP051222867, Retrieved from the Internet <URL:http://www.3gpp.org/ftp/tsg_ran/WG2_RL2/TSGR2_97/Docs/> [retrieved on 20170203]
- NOKIA ET AL: "Paging in NR at HF operation", vol. RAN WG2, no. Gothenburg, Sweden; 20160822 - 20160826, 21 August 2016 (2016-08-21), XP051140877, Retrieved from the Internet <URL:http://www.3gpp.org/ftp/Meetings_3GPP_SYNC/RAN2/Docs/> [retrieved on 20160821]
- FUJITSU: "Discussion on Paging in NR", 3GPPTSG RAN WG1 MEETING #86BIS, R1-1608810, 30 September 2016 (2016-09-30), XP051148864

## Description

### TECHNICAL FIELD

The present invention relates to the field of mobile wireless communications and, in particular, to a paging method and apparatus.

### BACKGROUND

With continuous progress in radio technologies, various radio services are flourishing. However, frequency spectrum resources relied by the radio services are limited. With increasing bandwidth requirements, the frequency spectrum resources of 300 MHz to 3 GHz which are mainly used in legacy commercial communications are extremely strained and cannot meet requirements of the future wireless communications. The next generation wireless communication (such as a new radio (NR) system or the 5th Generation (5G)), also including next generation wireless communication after the 5G) uses carrier frequencies, such as 28 GHz, 45 GHz, 70 GHz, or the like, higher than the carrier frequency used in the fourth-generation (4G) wireless communication system for communication. This type of high frequency channel has defects of a large free propagation loss, being easily absorbed by oxygen and being affected by rain attenuation, which seriously affect coverage performance of the high frequency communication system. However, the carrier frequency of the high frequency communications has a shorter wavelength, so more antenna elements can be accommodated per unit area. The more antenna elements may use a beamforming method to improve antenna gains, thereby ensuring the coverage performance of the high frequency communications.

With the beamforming method, the transmitting end may concentrate transmit energy in a certain direction, and the transmit energy is small or zero in other directions, that is, each beam has its own directivity and can only cover terminals in a certain direction. The transmitting end, such as a base station, needs to transmit multiple beams to implement full coverage. In a new generation of wireless communication systems, especially at high frequency bands, the coverage of a single transmit port is limited to a very small angle due to the application of beamforming techniques. In this case, the network side cannot know the UE in the IDLE state is covered by which beam or port. Compared with the existing cell-level paging message transmission mechanism at low frequency bands, to ensure the coverage of each potential position of the UE, no better method is provided at present, so that network deployment and resource scheduling cannot be satisfied. Further relevant technologies are also known from ERICSSON: "Means and configuration of paging delivery in NR", 3GPP DRAFT R2-1700550, 7 January 2017 (2017-01 - 07), and MEDIATEK INC: "Paging in NR with Beam Sweeping", 3GPP DRAFT R2-1701331, 3 February 2017 (2017-02-03).

### SUMMARY

To solve above-mentioned technical problem, embodiments of the present disclosure provide a paging method and apparatus.

It can ensure that not too much traffic channel blocking is caused, avoid excessive invalid and useless uplink access procedures, and take requirements for network deployment and resource scheduling into account.

The above problem is solved by a paging method according to claim 1 or 10 and a paging apparatus according to claim 14 or 15.

An embodiment of the present disclosure provides a paging method, including:
determining, by a transmitting end, a paging mode for a receiving end, where the paging mode includes at least one of: a sweeping mode, a trigger mode or a combination mode.

In the above solution, the step of determining, by the transmitting end, the paging mode for the receiving end includes:
configuring, by the transmitting end, a first paging mode for the receiving end, where the first paging mode includes at least one of: the sweeping mode, the trigger mode or the combination mode.

In the above solution, the step of determining, by the transmitting end, the paging mode for the receiving end includes:
presetting a second paging mode between the transmitting end and the receiving end.

In the above solution, the step of determining, by the transmitting end, the paging mode for the receiving end includes:
using an initial paging mode between the transmitting end and the receiving end, and indicating, by the transmitting end, paging mode switch to the receiving end.

In the above solution, the first paging mode is configured through paging mode configuration signaling, and the paging mode configuration signaling at least includes one of: user equipment (UE)-specific paging mode configuration signaling, paging occasion (PO)-specific paging mode configuration signaling, paging frame (PF)-specific paging mode configuration signaling, transmission reception point (TRP)-specific paging mode configuration signaling, cell-specific paging mode configuration signaling, or track area (TA)-specific paging mode configuration signaling.

In the above solution, the paging mode configuration signaling includes: using three states of an A-bit binary number to indicate the sweeping mode, the trigger mode and the combination mode respectively, and another state is reserved, where A is a natural number.

In the above solution, the paging mode configuration signaling includes: using two states of a B-bit binary number to indicate any two of the sweeping mode, the trigger mode, or the combination mode respectively, where B is a natural number.

In the above solution, in response to determining that the first paging mode is the sweeping mode or the combination mode, the method further includes:
configuring a power saving state through power saving state configuration signaling, where the power saving state configuration signaling at least includes one of: UE-specific power saving state configuration signaling, PO-specific power saving state configuration signaling, PF-specific power saving state configuration signaling, TRP-specific power saving state configuration signaling, cell-specific power saving state configuration signaling, or TA-specific power saving state configuration signaling.

In the above solution, the power saving state configuration signaling includes: using two states of a C-bit binary number to indicate a power saving state and a non-power-saving state respectively, where C is a natural number.

In the above solution, the trigger mode is configured through trigger state configuration signaling, and the trigger state configuration signaling at least includes one of: UE-specific trigger state configuration signaling, PO-specific trigger state configuration signaling, PF-specific trigger state configuration signaling, TRP-specific trigger state configuration signaling, cell-specific trigger state configuration signaling, or TA-specific trigger state configuration signaling.

In the above solution, the trigger state configuration signaling includes: using two states of a D-bit binary number to indicate a trigger state and a non-trigger state respectively, where D is a natural number.

In the above solution, a transmitting occasion of the trigger state configuration signaling and a paging occasion are same; or
the transmitting occasion of the trigger state configuration signaling is ahead of the paging occasion.

In the above solution, in the trigger state, after the receiving end reports a selected beam, a traffic channel is used for transmitting a paging message; or
in the trigger state, after the receiving end reports the selected beam, a downlink random access response (RAR) message corresponding to uplink random access is used for transmitting the paging message.

In the above solution, the step of using the initial paging mode between the transmitting end and the receiving end includes:
configuring the initial paging mode to the receiving end through the transmitting end; or
presetting the initial paging mode between the transmitting end and the receiving end.

In the above solution, the paging mode switch is indicated through paging mode switch signaling, and the paging mode switch signaling at least includes one of: UE-specific paging mode switch signaling, PO-specific paging mode switch signaling, PF-specific paging mode switch signaling, TRP-specific paging mode switch signaling, cell-specific paging mode switch signaling, or TA-specific paging mode switch signaling.

In the above solution, the paging mode switch signaling includes: using three states of an E-bit binary number to indicate maintaining the initial paging mode, switching to a first non-initial paging mode, and switching to a second non-initial paging mode, and another state is reserved, where E is a natural number.

In the above solution, the paging mode switch signaling includes: using two states of an F-bit binary number to indicate maintaining the initial paging mode and switching to a non-initial paging mode, where F is a natural number.

In the above solution, in response to determining that a paging message is a modification message or an indication message, the first paging mode is the sweeping mode.

In the above solution, in response to determining that the transmitting end and the receiving end do not have transmission-reception reciprocity, the first paging mode is the sweeping mode.

In response to determining that the transmitting end and/or the receiving end have transmission-reception reciprocity, the first paging mode is the trigger mode.

In the above solution, in response to determining that an uplink access load is greater than a first threshold, the first paging mode is the sweeping mode.

In response to determining that a downlink access load is greater than a second threshold, the first paging mode is the trigger mode.

In the above solution, in response to determining that the receiving end is in an idle state, the first paging mode is the sweeping mode.

In response to determining that the receiving end is in a connected state, the first paging mode is the trigger mode.

In the above solution, in response to determining that the paging message includes an S-temporary mobile subscriber identity (S-TMSI) or an international mobile subscriber identity (IMSI) to which a UE belongs, the first paging mode is the trigger mode.

In the above solution, in response to determining that the number of beams is greater than a third threshold, the first paging mode is the combination mode.

In the above solution, in response to determining that a single-frequency network is used, the first paging mode is the combination mode.

In the above solution, in response to determining that the receiving end is in an idle state, the second paging mode is the sweeping mode.

In the above solution, in response to determining that the receiving end is in a connected state, the second paging mode is the trigger mode.

In the above solution, in response to determining that the number of beams is greater than a third threshold, the second paging mode is the combination mode.

In the above solution, in response to determining that a single-frequency network is used, the second paging mode is the combination mode.

An embodiment of the present disclosure provides a paging method, including:
receiving a paging message according to a paging mode determined by a transmitting end for a receiving end, where the paging mode including at least one of: a sweeping mode, a trigger mode or a combination mode.

In the above solution, the step of receiving the paging message according to the paging mode determined by the transmitting end for the receiving end includes:
receiving the paging message according to a first paging mode configured by the transmitting end, where the first paging mode includes at least one of the sweeping mode, the trigger mode or the combination mode.

In the above solution, the step of receiving the paging message according to the paging mode determined by the transmitting end for the receiving end includes:
receiving the paging message according to a second paging mode preset between the transmitting end and the receiving end.

In the above solution, the step of receiving the paging message according to the paging mode determined by the transmitting end for the receiving end includes:
receiving the paging message by using an initial paging mode between the transmitting end and the receiving end, and receiving the paging message according to paging mode switch indicated by the transmitting end to the receiving end.

In the above solution, the initial paging mode is configured through the transmitting end to the receiving end; or
the initial paging mode is preset between the transmitting end and the receiving end.

In the above solution, in response to determining that the paging message is a modification message or an indication message, the first paging mode is the sweeping mode.

In the above solution, in response to determining that the transmitting end and the receiving end do not have transmission-reception reciprocity, the first paging mode is the sweeping mode.
in response to determining that the transmitting end and/or the receiving end have transmission-reception reciprocity, the first paging mode is the trigger mode.

In the above solution, in response to determining that an uplink access load is greater than a first threshold, the first paging mode is the sweeping mode; and
in response to determining that a downlink access load is greater than a second threshold, the first paging mode is the trigger mode.

In the above solution, in response to determining that the receiving end is in an idle state, the first paging mode is the sweeping mode; and
in response to determining that the receiving end is in a connected state, the first paging mode is the trigger mode.

In the above solution, in response to determining that the paging message includes an S-TMSI or an IMSI to which a UE belongs, the first paging mode is the trigger mode.

In the above solution, in response to determining that the number of beams is greater than a third threshold, the first paging mode is the combination mode.

In the above solution, in response to determining that a single-frequency network is used, the first paging mode is the combination mode.

In the above solution, in response to determining that the receiving end is in an idle state, the second paging mode is the sweeping mode.

In the above solution, in response to determining that the receiving end is in a connected state, the second paging mode is the trigger mode.

In the above solution, in response to determining that the number of beams is greater than a third threshold, the second paging mode is the combination mode.

In the above solution, in response to determining that a single-frequency network is used, the second paging mode is the combination mode.

An embodiment of the present disclosure provides a paging apparatus. The paging apparatus includes: a determination unit, which is configured to determine a paging mode for a receiving end, where the paging mode includes at least one of: a sweeping mode, a trigger mode or a combination mode.

In the above solution, the determination unit includes: a first configuration module, which is configured to configure a first paging mode for the receiving end, where the first paging mode includes at least one of: the sweeping mode, the trigger mode or the combination mode.

In the above solution, the determination unit includes: a configuration module, which is configured to preset a second paging mode between the apparatus and the receiving end.

In the above solution, the determination unit includes: a processing module, which is configured to use an initial paging mode with the receiving end, and is further configured to indicate paging mode switch to the receiving end.

In the above solution, the determination unit further includes: a second configuration module, which is configured to configure the initial paging mode to the receiving end; or
the processing module is configured to preset the initial paging mode with the receiving end.

An embodiment of the present disclosure further provides a paging apparatus. The paging apparatus includes: a receiving unit, which is configured to receive a paging message according to a paging mode determined by a transmitting end for a receiving end, and the paging mode includes at least one of: a sweeping mode, a trigger mode or a combination mode.

In the above solution, the receiving unit is further configured to receive the paging message according to a first paging mode configured by the transmitting end, and the first paging mode includes at least one of the sweeping mode, the trigger mode or the combination mode.

In the above solution, the receiving unit is further configured to receive the paging message according to a second paging mode preset between the transmitting end and the receiving end.

In the above solution, the receiving unit is further configured to receive the paging message according to the initial paging mode between the transmitting end and the receiving end, and is further configured to receive the paging message according to the paging mode switch indicated by the transmitting end to the receiving end.

In the above solution, the initial paging mode is configured through the transmitting end to the receiving end; or
the initial paging mode is preset between the transmitting end and the receiving end.

An embodiment of the present disclosure provides a transmitting end. The transmitting end includes: a processor, which is configured to determine a paging mode for a receiving end, where the paging mode includes at least one of: a sweeping mode, a trigger mode or a combination mode.

In the above solution, the processor is further configured to configure a first paging mode for the receiving end, where the first paging mode includes at least one of: the sweeping mode, the trigger mode or the combination mode.

In the above solution, the processor is further configured to preset a second paging mode with the receiving end.

In the above solution, the processor is further configured to use an initial paging mode with the receiving end, and the transmitting end indicates paging mode switch to the receiving end.

In the above solution, the processor is further configured to configure the initial paging mode for the receiving end through the transmitting end; or is further configured to preset the initial paging mode with the receiving end.

An embodiment of the present disclosure provides a receiving end. The receiving end includes: a receiver which is configured to receive a paging message according to a paging mode determined by a transmitting end for a receiving end, where the paging mode includes at least one of: a sweeping mode, a trigger mode or a combination mode.

In the above solution, the receiver is further configured to receive the paging message according to a first paging mode configured by the transmitting end, where the first paging mode includes at least one of the sweeping mode, the trigger mode or the combination mode.

In the above solution, the receiver is further configured to receive the paging message according to a second paging mode preset between the transmitting end and the receiving end.

In the above solution, the receptor is further configured to receive the paging message according to the initial paging mode between the transmitting end and the receiving end, and is further configured to receive the paging message according to the paging mode switch indicated by the transmitting end to the receiving end.

An embodiment of the present disclosure provides a paging system, which includes a transmitting end described above and a receiving end described above.

An embodiment of the present disclosure further provides a computer storage medium. The computer storage medium stores a computer program, which is configured to execute the paging method provided by the embodiment of the present disclosure.

An embodiment of the present disclosure further provides a paging method and apparatus, a transmitting end, a receiving end, a system and a storage medium. The transmitting end determines a paging mode for the receiving end. The paging mode includes at least one of: a sweeping mode, a trigger mode or a combination mode. Therefore, it is ensured that traffic channel blocking is not too much, excessive invalid and useless uplink access procedures are avoided, and requirements for both network deployment and resource scheduling are taken into account.

### BRIEF DESCRIPTION OF DRAWINGS

In the drawings (which are not necessarily drawn to scale), similar reference markers in the drawings may denote similar components in different diagrams. The similar reference markers having different letter suffixes may denote different examples of the similar components. The drawings generally illustrate various embodiments discussed in the present disclosure by way of examples rather than limitations.
FIG. 1 is a flowchart of a paging method provided by an embodiment of the present disclosure;
FIG. 2 is a schematic diagram of an embodiment of the present disclosure in which a sweeping mode and a trigger coexist in a non-power-saving state;
FIG. 3 is a schematic diagram of an embodiment of the present disclosure in which a sweeping mode and a trigger coexist in a power saving state;
FIG. 4 is a schematic diagram of an embodiment of the present disclosure in which a sweeping mode, a combination mode and a trigger mode coexist;
FIG. 5 is a schematic diagram of an embodiment of the present disclosure in which an initial paging mode is a sweeping mode, and a paging mode to be switched is a trigger mode;
FIG. 6 is a structural diagram one of a paging apparatus provided by an embodiment of the present disclosure;
FIG. 7 is a structural diagram two of a paging apparatus provided by an embodiment of the present disclosure;
FIG. 8 is a structural diagram three of a paging apparatus provided by an embodiment of the present disclosure;
FIG. 9 is a structural diagram four of a paging apparatus provided by an embodiment of the present disclosure;
FIG. 10 is a structural diagram of a transmitting end provided by an embodiment of the present disclosure; and
FIG. 11 is a structural diagram of a receiving end provided by an embodiment of the present disclosure.

### DETAILED DESCRIPTION

Technical solutions in embodiments of the present disclosure will be described clearly and completely in conjunction with drawings in the embodiments of the present disclosure.

To clearly understand the paging method provided by the present disclosure, a brief introduction to the basic paging mode is provided. Compared with the existing low-frequency band cell-level paging message sending mechanism, three typical methods are provided for ensuring coverage of potential positions of each UE. A first method needs to repeat transmitting paging information with all beams, i.e., a network side needs to emit more paging information to ensure that the UE under each beam direction or port has an opportunity to receive specified paging information. This mode is referred to as sweeping mode. For the sweeping mode, due to limitation of the number of base station RF links, it takes a long time to complete paging in each beam direction, and a large number of sweeping structures used for the paging will cause a blocking effect on a traffic channel, i.e., a beam direction occupied by the paging can only be used for scheduling the traffic channel of the UE in this direction, other beam directions which would have been scheduled at a corresponding time cannot be scheduled now. To overcome shortcomings of the sweeping mode, a second method is provided, i.e. the network side triggers the UE to report an available downlink beam in advance, and the network side transmits the paging information according to the received available downlink beam reported by the UE, and such mode is a trigger mode. For the trigger mode, the UE needs to perform an uplink access process. When the paging message does not include S-TMSI or IMSI to which the UE belongs, it indicates that there is no incoming call of the UE at this time, and the uplink access process performed by the UE is invalid and useless; or when the paging message only includes a modification message or an indication message, the uplink access process performed previously by the UE is invalid and useless, resulting in waste of uplink access resources. To overcome the shortcomings of the sweeping mode and the trigger mode, a third method is proposed, i.e., the transmission is repeated in an omnidirectional mode, or a single frequency network (SFN) transmission mode is used to ensure coverage performance of high-frequency communications, and such mode is a combination mode. For the combination mode, more time-frequency resources are needed by the repeated transmission, or neighboring cells are needed to use the same frequency to maintain a synchronization state, which imposes limitations on flexible network deployment and flexible resource scheduling of the entire system.

For the basic paging mechanism, paging associated information includes paging scheduling information and the paging message. The paging scheduling information is a resource position for scheduling and allocating the paging message. The paging message includes information such as systemInfoModification, earthquake tsunami warning system indication (etws-indication), commercial mobile alarm service indication (cmas-indication), extended access barring parameter modification (eab-ParamModification), redistribution indication, systemInfoModification corresponding to extended discontinuous reception (systemInfoModification-eDRX), paging record (including S-TMSI or IMSI). The user equipment (UE) detects corresponding paging scheduling information in different paging occasions, and each UE has its own corresponding PO, and each paging frame (PF) corresponds to one or more POs. If the UE does not detect the paging scheduling information on the corresponding PO, the UE does not perform the subsequent paging process. If the UE detects the paging scheduling information, the UE receives and demodulates the paging message according to the paging scheduling information. If the paging message includes the S-TMSI or the IMSI to which the UE belongs, the UE performs a subsequent connection establishment process (the S-TMSI or the IMSI exists in the paging message, which is usually for the regular incoming calls); if the paging message includes another modification message or indication message, the UE performs a subsequent process of receiving the corresponding message. For example, if the message is the systemInfoModification, the UE performs the subsequent process of receiving the corresponding message.

### Embodiment one

An embodiment of the present disclosure provides a paging method. The method may include: determining, by a transmitting end, a paging mode for a receiving end. The paging mode includes at least one of: a sweeping mode, a trigger mode or a combination mode.

In a possible implementation mode, the step of determining, by the transmitting end, the paging mode for the receiving end may include:
configuring, by the transmitting end, a first paging mode for the receiving end, where the first paging mode includes at least one of: the sweeping mode, the trigger mode or the combination mode.

In one embodiment, the first paging mode may be configured through paging mode configuration signaling, and the paging mode configuration signaling at least includes one of: UE-specific paging mode configuration signaling, PO-specific paging mode configuration signaling, PF-specific paging mode configuration signaling, TRP-specific paging mode configuration signaling, cell-specific paging mode configuration signaling, or TA-specific paging mode configuration signaling.

In one embodiment, the paging mode configuration signaling may be indicated by using an A-bit binary number, where A is a natural number. Preferably, A is 2, three states of the A-bit binary number are used for indicating the sweeping mode, the trigger mode and the combination mode respectively, and another state is reserved.

In one embodiment, the paging mode configuration signaling may be indicated by using a B-bit binary number, where B is a natural number. When B is 1, two states of the B-bit binary number are used for indicating any two of the sweeping mode, the trigger mode and the combination mode respectively.

In one embodiment, in response to determining that the first paging mode is the sweeping mode or the combination mode, the method further includes the following step.

A power saving state is configured through power saving state configuration signaling, and the power saving state configuration signaling includes at least one of: UE-specific power saving state configuration signaling, PO-specific power saving state configuration signaling, PF-specific power saving state configuration signaling, TRP-specific power saving state configuration signaling, cell-specific power saving state configuration signaling, or TA-specific power saving state configuration signaling.

The power saving state configuration signaling may be indicated by using a C-bit binary number, where C is a natural number. When C is 1, two states of the C-bit binary number are used for indicating the power saving state and the non-power-saving state.

In a possible implementation mode, the trigger mode may be configured through trigger state configuration signaling, and the trigger state configuration signaling includes at least one of: UE-specific trigger state configuration signaling, PO-specific trigger state configuration signaling, PF-specific trigger state configuration signaling, TRP-specific trigger state configuration signaling, cell-specific trigger state configuration signaling, or TA-specific trigger state configuration signaling.

In one embodiment, the trigger state configuration signaling may be indicated by using a D-bit binary number, where D is a natural number. When D is 1, two states of the D-bit binary number are used for indicating the trigger state and a non-trigger state.

In one embodiment, a transmitting occasion of the trigger state configuration signaling and a PO are same.

In one embodiment, the transmitting occasion of the trigger state configuration signaling is ahead of the PO.

In a possible implementation mode, in the trigger state, after the receiving end reports a selected beam, a traffic channel is used for transmitting the paging message.

In a possible implementation mode, in the trigger state, after the receiving end reports the selected beam, a downlink random access response (RAR) message corresponding to uplink random access is used for transmitting the paging message.

In one embodiment, in response to determining that the paging message is a modification message or an indication message, the first paging mode is the sweeping mode.

In one embodiment, in response to determining that the transmitting end and the receiving end do not have transmission-reception reciprocity, the first paging mode is the sweeping mode.

In one embodiment, in response to determining that the transmitting end and/or the receiving end have transmission-reception reciprocity, the first paging mode is the trigger mode.

In one embodiment, in response to determining that an uplink access load is greater than a first threshold, the first paging mode is the sweeping mode.

In one embodiment, in response to determining that a downlink access load is greater than a second threshold, the first paging mode is the trigger mode.

In one embodiment, in response to determining that the receiving end is in an idle state, the first paging mode is the sweeping mode.

In one embodiment, in response to determining that the receiving end is in a connected state, the first paging mode is the trigger mode.

In one embodiment, in response to determining that the paging message includes an S-temporary mobile subscriber identity (S-TMSI) or an international mobile subscriber identity (IMSI) to which a UE belongs, the first paging mode is the trigger mode.

In one embodiment, in response to determining that the number of beams is greater than a third threshold, the first paging mode is the combination mode.

In one embodiment, in response to determining that a single-frequency network is used, the first paging mode is the combination mode.

In a possible implementation mode, the step of determining, by the transmitting end, the paging mode for the receiving end may include:
presetting a second paging mode between the transmitting end and the receiving end.

In one embodiment, in response to determining that the receiving end is in an idle state, the second paging mode is the sweeping mode; and
In one embodiment, in response to determining that the receiving end is in a connected state, the second paging mode is the trigger mode.

In one embodiment, in response to determining that the number of beams is greater than a third threshold, the second paging mode is the combination mode.

In one embodiment, in response to determining that a single-frequency network is used, the second paging mode is the combination mode.

In a possible implementation mode, the step of determining, by the transmitting end, the paging mode for the receiving end may include:
adopting an initial paging mode between the transmitting end and the receiving end, and indicating, by the transmitting end, the receiving end to perform paging mode switch.

In a possible implementation mode, the step of using the initial paging mode between the transmitting end and the receiving end includes:
configuring the initial paging mode to the receiving end through the transmitting end; or
preset the initial paging mode between the transmitting end and the receiving end.

In one embodiment, the paging mode switch may be indicated through paging mode switch signaling, and the paging mode switch signaling includes at least one of: UE-specific paging mode switch signaling, PO-specific paging mode switch signaling, PF-specific paging mode switch signaling, TRP-specific paging mode switch signaling, cell-specific paging mode switch signaling, or TA-specific paging mode switch signaling.

In one embodiment, the paging mode switch signaling may be indicated by using an E-bit binary number, where E is a natural number. When E is 2, three states of the E-bit binary number are used for indicating: maintaining the initial paging mode, switching to a first non-initial paging mode, and switching to a second non-initial paging mode, and another state is reserved.

In one embodiment, the paging mode switch signaling may be indicated by using an F-bit binary number, where F is a natural number. When F is 1, two states of the F-bit binary number are used for indicating the maintaining the initial paging mode and switching to a non-initial paging mode.

The paging method provided by the embodiment of the present disclosure may be configured in different modes according to different load conditions, different message types, or different ranges, thereby ensuring that traffic channel blocking is not too much, avoiding excessive invalid and useless uplink access procedures, and taking requirements for both network deployment and resource scheduling into account.

### Embodiment two

An embodiment of the present disclosure further provides a paging method. The method may include that a receiving end receives a paging message according to a paging mode determined by a transmitting end for the receiving end. The paging mode includes at least one of a sweeping mode, a trigger mode or a combination mode.

In a possible implementation mode, the step of receiving the paging message according to the paging mode determined by the transmitting end for the receiving end includes:
receiving the paging message according to a first paging mode configured by the transmitting end, where the first paging mode includes the sweeping mode, the trigger mode and the combination mode.

In one embodiment, the first paging mode may be configured through paging mode configuration signaling, and the paging mode configuration signaling includes at least one of: UE-specific paging mode configuration signaling, PO-specific paging mode configuration signaling, PF-specific paging mode configuration signaling, TRP-specific paging mode configuration signaling, cell-specific paging mode configuration signaling, or TA-specific paging mode configuration signaling.

In one embodiment, the paging mode configuration signaling may be indicated by using an A-bit binary number, where A is a natural number. Preferably, A is 2, three states of the A-bit binary number are used for indicating the sweeping mode, the trigger mode and the combination mode respectively, and another state is reserved.

In one embodiment, the paging mode configuration signaling may be indicated by using a B-bit binary number, where B is a natural number. When B is 1, two states of the B-bit binary number are used for indicating any two of the sweeping mode, the trigger mode and the combination mode respectively.

In one embodiment, in response to determining that the first paging mode is the sweeping mode or the combination mode, the method further includes the following step.

A power saving state is configured through power saving state configuration signaling, and the power saving state configuration signaling includes at least one of: UE-specific power saving state configuration signaling, PO-specific power saving state configuration signaling, PF-specific power saving state configuration signaling, TRP-specific power saving state configuration signaling, cell-specific power saving state configuration signaling, or TA-specific power saving state configuration signaling.

The power saving state configuration signaling may be indicated by using a C-bit binary number, where C is a natural number. When C is 1, two states of the C-bit binary number are used for indicating the power saving state and a non-power-saving state.

In a possible implementation mode, the trigger mode may be configured through trigger state configuration signaling, trigger state configuration signaling includes at least one of: UE-specific, PO-specific, PF-specific, TRP-specific, cell-specific or TA-specific.

In one embodiment, the trigger state configuration signaling may be indicated by using a D-bit binary number, where D is a natural number. When D is 1, two states of the D-bit binary number are used for indicating a trigger state and a non-trigger state.

In one embodiment, a transmitting occasion of the trigger state configuration signaling and a PO are same.

In one embodiment, the transmitting occasion of the trigger state configuration signaling is ahead of the PO.

In a possible implementation mode, in the trigger state, after the receiving end reports a selected beam, a traffic channel is used for transmitting the paging message.

In a possible implementation mode, in the trigger state, after the receiving end reports the selected beam, a downlink random access response (RAR) message corresponding to uplink random access is used for transmitting the paging message.

In one embodiment, in response to determining that the paging message is a modification message or an indication message, the first paging mode is the sweeping mode.

In one embodiment, in response to determining that the transmitting end and the receiving end do not have transmission-reception reciprocity, the first paging mode is the sweeping mode.

In one embodiment, in response to determining that the transmitting end and/or the receiving end have transmission-reception reciprocity, the first paging mode is the trigger mode.

In one embodiment, in response to determining that an uplink access load is greater than a first threshold, the first paging mode is the sweeping mode.

In one embodiment, in response to determining that a downlink access load is greater than a second threshold, the first paging mode is the trigger mode.

In one embodiment, in response to determining that the receiving end is in an idle state, the first paging mode is the sweeping mode.

In one embodiment, in response to determining that the receiving end is in a connected state, the first paging mode is the trigger mode.

In one embodiment, in response to determining that the paging message includes an S-TMSI or an IMSI to which a UE belongs, the first paging mode is the trigger mode.

In one embodiment, in response to determining that the number of beams is greater than a third threshold, the first paging mode is the combination mode.

In one embodiment, in response to determining that a single-frequency network is used, the first paging mode is the combination mode.

In a possible implementation mode, the step of receiving the paging message according to the paging mode determined by the transmitting end for the receiving end includes:
receiving the paging message according to a second paging mode preset by the transmitting end and the receiving end.

In one embodiment, in response to determining that the receiving end is in an idle state, the second paging mode is the sweeping mode; and
In one embodiment, in response to determining that the receiving end is in a connected state, the second paging mode is the trigger mode.

In one embodiment, in response to determining that the number of beams is greater than a third threshold, the second paging mode is the combination mode.

In one embodiment, in response to determining that a single-frequency network is used, the second paging mode is the combination mode.

In a possible implementation mode, the step of receiving the paging message according to the paging mode determined by the transmitting end for the receiving end includes:
receiving the paging message by using an initial paging mode between the transmitting end and the receiving end, and receiving the paging message according to paging mode switch indicated by the transmitting end to the receiving end.

In one embodiment, the initial paging mode is configured through the transmitting end to the receiving end.

In one embodiment, the initial paging mode is preset between the transmitting end and the receiving end.

In one embodiment, the paging mode switch may be indicated through paging mode switch signaling, and the paging mode switch signaling includes at least one of: UE-specific paging mode switch signaling, PO-specific paging mode switch signaling, PF-specific paging mode switch signaling, TRP-specific paging mode switch signaling, cell-specific paging mode switch signaling, or TA-specific paging mode switch signaling.

In one embodiment, the paging mode switch signaling may be indicated by using an E-bit binary number, where E is a natural number. When E is 2, three states of the E-bit binary number is used to indicate maintaining the initial paging mode, switching to a first non-initial paging mode, and switching to a second non-initial paging mode, and another state is reserved.

In one embodiment, the paging mode switch signaling may be indicated by using an F-bit binary number, where F is a natural number. When F is 1, two states of the F-bit binary number are used for indicating maintaining the initial paging mode and switching to a non-initial paging mode.

The paging method provided by the embodiment of the present disclosure may be configured in different modes according to different load conditions, different message types, or different ranges, which can ensure that the traffic channel blocking is not too much, avoid excessive invalid and useless uplink access procedures, and take requirements for network deployment and resource scheduling into account.

### Embodiment three

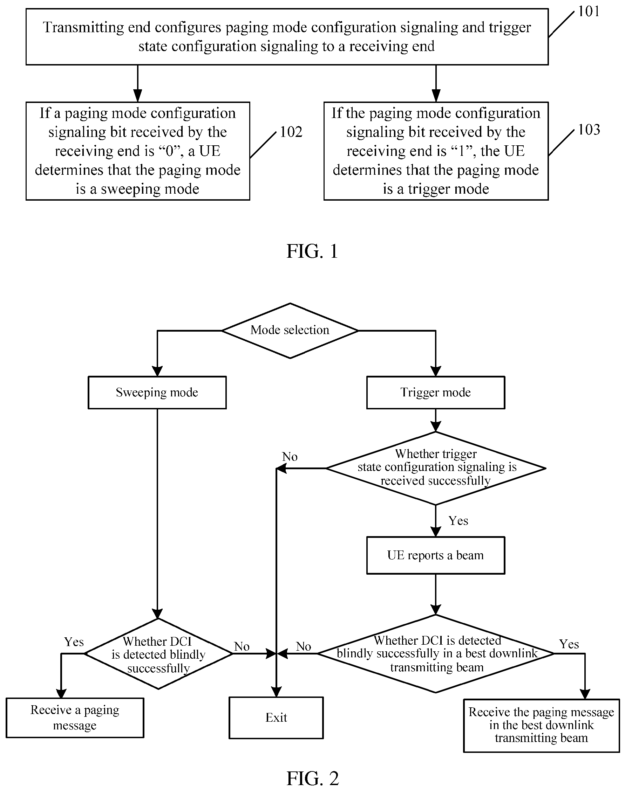

An embodiment of the present disclosure provides a paging method, as shown in FIG. 1, a system where the method is applied has two paging mechanisms in which a sweeping mode and a trigger mode coexist in a non-power-saving state, as shown in FIG. 1.

In step 101, a transmitting end configures paging mode configuration signaling and trigger state configuration signaling to a receiving end.

Here, the system includes the transmitting end and the receiving end, the transmitting end may be a network side, the receiving end may be a UE, i.e., the system includes the network side and the UE.

Two states of 1-bit binary paging mode configuration signaling, such as "0" and "1", respectively indicate the sweeping mode and the trigger mode. Two states of 1-bit binary trigger state configuration signaling, such as "0" and "1", respectively indicate a trigger state and a non-trigger state. A transmitting occasion of the trigger state configuration signaling and a PO are same. Alternatively, the transmitting occasion of the trigger state configuration signaling is ahead of the PO.

In step 102, if the bit of the paging mode configuration signaling received by the receiving end is "0", a UE determines that the paging mode is the sweeping mode.

As shown in FIG. 2, the UE detects the corresponding paging scheduling information at the PO, i.e., whether the UE can successfully blindly detect downlink control information (DCI). If the DCI is blindly detected successfully, the UE further receives a Rx paging message; otherwise, the process is exited.

In step 103, if the bit of the paging mode configuration signaling received by the receiving end is "1", the UE determines that the paging mode is the trigger mode.

As shown in FIG. 2, whether the UE receives trigger state configuration signaling i.e., whether Rx trigger signaling successfully. If the bit of the received trigger state configuration signaling is "0", the UE reports a beam, and the UE detects the paging scheduling information at the PO. That is, whether the DCI is successfully detected blindly in a best downlink transmission beam (BD DCI in best DL Tx beam successfully). If the DCI is successfully detected, the paging message is continuously received. That is, the paging message is received in the best downlink transmission beam (Rx paging message in best DL Tx beam). If the DCI is not successfully detected, the process is exited. If the bit of the received trigger state configuration signaling is "1" or no trigger state configuration signaling is received, the UE does not detect the corresponding paging scheduling information at the PO.

As shown in FIG. 2, the PO is defined as "Whether the trigger state configuration signaling is received successfully (Whether Rx trigger signaling successfully)", which means that the transmitting occasion of the trigger state configuration signaling and the PO are same. The PO is defined as "whether the DCI is detected blindly in the best downlink transmission beam successfully (BD DCI in best DL Tx beam successfully)", which means that the transmitting occasion of the trigger state configuration signaling is ahead of the PO.

The paging method provided by the embodiment of the present disclosure may be configured in different modes according to different load conditions, different message types, or different ranges, which can ensure that the caused traffic channel blocking is not too much, avoid excessive invalid and useless uplink access procedures, and take requirements for network deployment and resource scheduling into account.

### Embodiment four

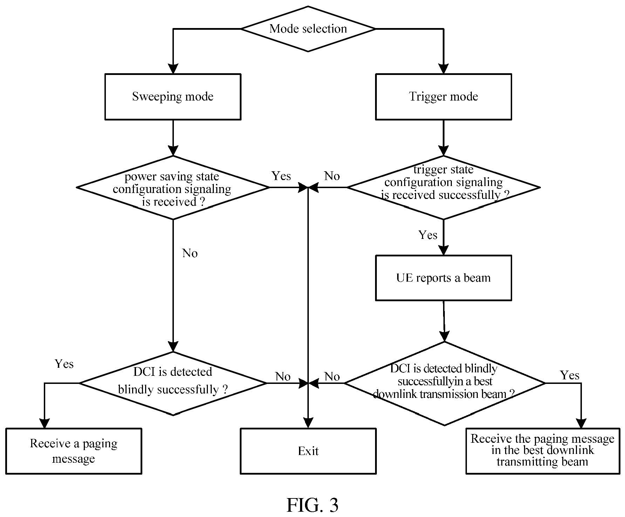

An embodiment of the present disclosure provides a paging method. A system where the method is applied has two paging mechanisms. As shown in FIG. 3, a sweeping mode and a trigger mode coexist in a power saving state.

Here, the system includes the transmitting end and the receiving end, the transmitting end may be a network side, the receiving end may be a UE, i.e., the system includes the network side and the UE.

The transmitting end configures paging mode configuration signaling, trigger state configuration signaling and power saving state configuration signaling to a receiving end. Two states of 1-bit binary paging mode configuration signaling, such as "0" and "1", respectively indicate the sweeping mode and the trigger mode. Two states of 1-bit binary trigger state configuration signaling, such as "0" and "1", respectively indicate a trigger state and a non-trigger state. The transmitting occasion of the trigger state configuration signaling and a PO are same; or the transmitting occasion of the trigger state configuration signaling is ahead of the PO. Two states of 1-bit binary power saving state configuration signaling, such as "0" and "1", respectively indicate a power saving state and a non-power-saving state.

If the bit of the paging mode configuration signaling received by the receiving end is "0", the UE determines that the paging mode is the sweeping mode.

As shown in FIG. 3, the UE determines that the paging mode is the sweeping mode, and whether the UE receives the power saving state configuration signaling (Is power saving signaling ture). If bit of the received power saving state configuration signaling is "0", the UE detects the paging scheduling information at the PO, i.e., whether the DCI is successfully detected blindly (BD DCI successfully), if the DCI is successfully detected, the paging message is continuously received (Rx paging message). If the DCI is not successfully detected, the process is exited. If the bit of the received power saving state configuration signaling is "1" or no power saving state configuration signaling is received, the UE does not detect the corresponding paging scheduling information at the PO.

If the bit of the paging mode configuration signaling received by the receiving end is "1", the UE determines that the paging mode is the trigger mode.

As shown in FIG. 3, the UE determines that the paging mode is the trigger mode, and whether the UE receives the trigger state configuration signaling, i.e., Whether Rx trigger signaling successfully. If the bit of the received trigger state configuration signaling is "0", the UE reports the beam, the UE detects the corresponding paging scheduling information at the PO, i.e., whether the DCI is successfully blindly detected in the best downlink transmission beam (BD DCI in best DL Tx beam successfully), if the DCI is successfully detected, the paging message is continuously received, i.e., Rx paging message in best DL Tx beam. If the DCI is not successfully detected, the process is exited. If the bit of the received trigger state configuration signaling "1" or no trigger state configuration signaling is received, the UE does not detect the corresponding paging scheduling information at the PO.

As shown in FIG. 3, the PO is defined as "whether the trigger state configuration signaling is received successfully (Whether Rx trigger signaling successfully)", which means that the transmitting occasion of the trigger state configuration signaling and the PO are same. The PO is defined as "whether the DCI is detected blindly in the best downlink transmission beam successfully (BD DCI in best DL Tx beam successfully)", which means that the transmitting occasion of the trigger state configuration signaling is ahead of the PO.

The paging method provided by the embodiment of the present disclosure may be configured in different modes according to different load conditions, different message types, or different ranges, which can ensure that the traffic channel blocking is not too much, avoid excessive invalid and useless uplink access procedures, and take requirements for network deployment and resource scheduling into account.

### Embodiment five

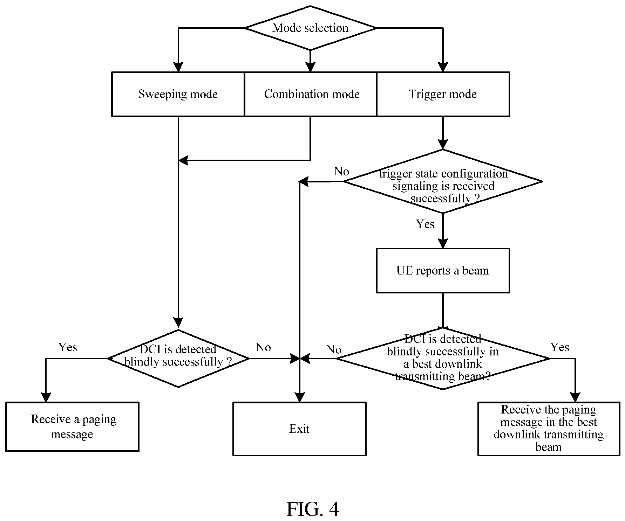

An embodiment of the present disclosure provides a paging method. A system to which the method is applied has three paging mechanisms. As shown in FIG. 4, a sweeping mode, a combination mode and a trigger mode coexist in a non-power-saving state.

The system includes the transmitting end and the receiving end, the transmitting end may be a network side, the receiving end may be a UE, i.e., the system includes the network side and the UE.

The transmitting end configures paging mode configuration signaling and trigger state configuration signaling to the receiving end. Three states of 2-bit binary paging mode configuration signaling, such as "00", "01" and "10", respectively indicate the sweeping mode, the combination mode and the trigger mode, and a "11" state is reserved. Two states of 1-bit binary trigger state configuration signaling, such as "0" and "1", respectively indicate a trigger state and a non-trigger state. The transmitting occasion of the trigger state configuration signaling and a PO are same; or the transmitting occasion of the trigger state configuration signaling is ahead of the PO.

If the bits of the paging mode configuration signaling received by the receiving end are "00", the UE determines that the paging mode is the sweeping mode.

As shown in FIG. 4, the UE determines that the paging mode is the sweeping mode, the UE detects the corresponding paging scheduling information at the PO, i.e., whether DCI is successfully detected. If the DCI is blindly detected successfully, the paging message, i.e., a Rx paging message is continuously received; otherwise, the process is exited.

If the bits of the paging mode configuration signaling received by the receiving end are "01", the UE determines that the paging mode is the combination mode.

As shown in FIG. 4, the UE determines that the paging mode is the combination mode, the UE detects the corresponding paging scheduling information at the PO, i.e., whether DCI is successfully detected. If the DCI is blindly detected successfully, the paging message, i.e., a Rx paging message is continuously received; otherwise, the process is exited.

If the bits of the paging mode configuration signaling received by the receiving end are "10", the UE determines that the paging mode is the trigger mode.

As shown in FIG. 4, the UE determines that the paging mode is the trigger mode, and whether the UE receives the trigger state configuration signaling, i.e., Whether Rx trigger signaling successfully. If the bit of the received trigger state configuration signaling is "0", the UE reports the beam, the UE detects the corresponding paging scheduling information at the PO, i.e., whether the DCI is successfully blindly detected in the best downlink transmission beam (BD DCI in best DL Tx beam successfully), if the DCI is successfully detected, the paging message is continuously received, i.e., Rx paging message in best DL Tx beam. If the DCI is not successfully detected, the process is exited. If the bit of the received trigger state configuration signaling is "1" or no trigger state configuration signaling is received, the UE does not detect the corresponding paging scheduling information at the PO.

As shown in FIG. 4, the PO is defined as "whether the trigger state configuration signaling is received successfully (Whether Rx trigger signaling successfully)", which means that the transmitting occasion of the trigger state configuration signaling and the PO are same. The PO is defined as "whether the DCI is detected blindly in the best downlink transmission beam successfully (BD DCI in best DL Tx beam successfully)", which means that the transmitting occasion of the trigger state configuration signaling is ahead of the PO.

The paging method provided by the embodiment of the present disclosure may be configured in different modes according to different load conditions, different message types, or different ranges, which can ensure that the traffic channel blocking is not too much, avoid excessive invalid and useless uplink access procedures, and take requirements for network deployment and resource scheduling into account.

### Embodiment six

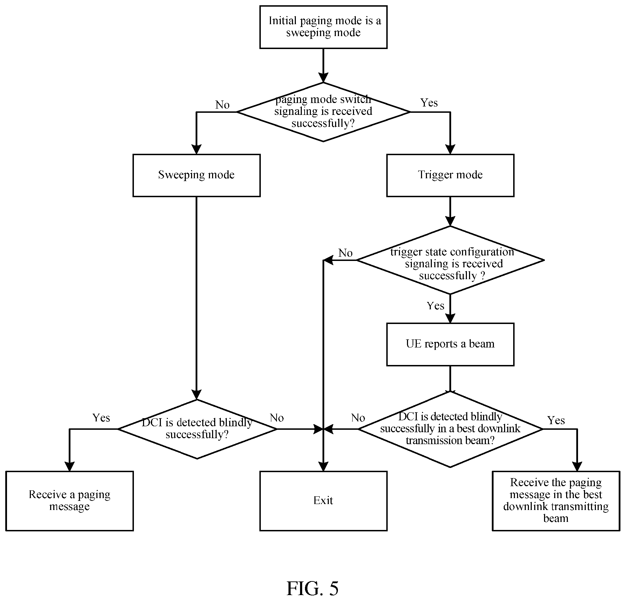

An embodiment of the present disclosure provides a paging method. A system to which the method is applied has two paging mechanisms. As shown in FIG. 5, an initial paging mode is a sweeping mode (an initial default sweeping mode), a paging mode to be switched is a trigger mode.

Here, the system includes the transmitting end and the receiving end, the transmitting end may be a network side, the receiving end may be a UE, i.e., the system includes the network side and the UE.

The transmitting end indicates paging mode switch signaling and trigger state configuration signaling to the receiving end. Two states of 1-bit binary paging mode switch signaling, such as "0" and "1", respectively indicate maintaining sweeping mode and switching to the trigger mode. Two states of 1-bit binary trigger state configuration signaling, such as "0" and "1", respectively indicate a trigger state and a non-trigger state. The transmitting occasion of the trigger state configuration signaling and a PO are same; or the transmitting occasion of the trigger state configuration signaling is ahead of the PO.

Whether the paging mode switch signaling is successfully received is determined (Whether Rx switching signaling successfully), and if the bit of the paging mode switch signaling received by the receiving end is "0", the UE determines to maintain the paging mode in the sweeping mode.

As shown in FIG. 5, the UE determines that the paging mode is the sweeping mode, the UE detects the corresponding paging scheduling information at the PO, i.e., whether DCI is successfully detected. If the DCI is blindly detected successfully, the paging message, i.e., a Rx paging message is continuously received; otherwise, the process is exited.

If the bit of the paging mode switch signaling received by the receiving end is "1", the UE determines to switch the paging mode to the trigger mode.

As shown in FIG. 5, the UE determines that the paging mode is the trigger mode, and whether the UE receives the trigger state configuration signaling, i.e., Whether Rx trigger signaling successfully. If the bit of the received trigger state configuration signaling is "0", the UE reports the beam, the UE detects the corresponding paging scheduling information at the PO, i.e., whether the DCI is successfully blindly detected in the best downlink transmission beam (BD DCI in best DL Tx beam successfully), if the DCI is successfully detected, the paging message is continuously received, i.e., Rx paging message in best DL Tx beam. If the DCI is not successfully detected, the process is exited. If the bit of the received trigger state configuration signaling is "1" or no trigger state configuration signaling is received, the UE does not detect the corresponding paging scheduling information at the PO.

As shown in FIG. 5, the PO is defined as "whether the trigger state configuration signaling is received successfully (Whether Rx trigger signaling successfully)", which means that the transmitting occasion of the trigger state configuration signaling and the PO are same. The PO is defined as "whether the DCI is detected blindly in the best downlink transmission beam successfully (BD DCI in best DL Tx beam successfully ?)", which means that the transmitting occasion of the trigger state configuration signaling is ahead of the PO.

The paging method provided by the embodiment of the present disclosure may be configured in different modes according to different load conditions, different message types, or different ranges, which can ensure that the traffic channel blocking is not too much, avoid excessive invalid and useless uplink access procedures, and take requirements for network deployment and resource scheduling into account.

### Embodiment seven

An embodiment of the present disclosure provides a paging method. The system to which the method is applied has paging mode configuration signaling, trigger state configuration signaling, power saving state configuration signaling, and paging mode switch signaling. Each of the four configuration signaling may be at least one of: UE-specific, PO-specific, PF-specific, TRP-specific, cell-specific, or TA-specific.

For the PO-specific mode, the PO-specific configuration signaling corresponding to each PO is independently configured, or the PO-specific configuration signaling corresponding to multiple POs is jointly configured.

For the PF-specific mode, PF-specific configuration signaling corresponding to each PF is independently configured, or PF-specific configuration signaling corresponding to multiple PFs is jointly configured.

For the TRP-specific mode, TRP-specific configuration signaling corresponding to each TRP is independently configured, or TRP-specific configuration signaling corresponding to multiple TRPs is jointly configured.

For the cell-specific mode, cell-specific configuration signaling corresponding to each cell is independently configured, or cell-specific configuration signaling corresponding to multiple cells is jointly configured.

The paging method provided by the embodiment of the present disclosure may be configured in different modes according to different load conditions, different message types, or different ranges, which can ensure that the traffic channel blocking is not too much, avoid excessive invalid and useless uplink access procedures, and take requirements for network deployment and resource scheduling into account.

### Embodiment eight

An embodiment of the present disclosure provides a paging method. In the system where the method is applied, the transmitting end configures a paging mode for the receiving end, i.e., the transmitting end configures a first paging mode for the receiving end.

The system includes the transmitting end and the receiving end, the transmitting end may be a network side, the receiving end may be a UE, i.e., the system includes the network side and the UE.

In a possible implementation mode, in response to determining that a paging message is a modification message or an indication message, the configured first paging mode is the sweeping mode.

In response to determining that the transmitting end and the receiving end do not have transmission-reception reciprocity, the configured first paging mode is the sweeping mode.

In response to determining that an uplink access load is greater than a first threshold, the configured first paging mode is the sweeping mode.

In response to determining that the receiving end is in an idle state, the configured first paging mode is the sweeping mode.

In a possible implementation mode, in response to determining that the paging message includes an S-TMSI or an IMSI to which a UE belongs, the configured first paging mode is the sweeping mode.

In response to determining that the transmitting end and/or the receiving end have transmission-reception reciprocity, the configured first paging mode is the trigger mode.

In response to determining that a downlink access load is greater than a second threshold, the configured first paging mode is the trigger mode.

In response to determining that the receiving end is in a connected state, the configured first paging mode is the trigger mode.

In a possible implementation mode, in response to determining that the number of beams is greater than a third threshold, the configured first paging mode is the combination mode.

In response to determining that a single-frequency network is used, the configured first paging mode is the combination mode.

The paging method provided by the embodiment of the present disclosure may be configured in different modes according to different load conditions, different message types, or different ranges, which can ensure that the traffic channel blocking is not too much, avoid excessive invalid and useless uplink access procedures, and take requirements for network deployment and resource scheduling into account.

### Embodiment nine

An embodiment of the present disclosure provides a paging method. The method is applied to a system, a transmitting end and a receiving end of which use a default specific paging mode, i.e., a second paging mode is preset between the transmitting end and the receiving end.

The system includes the transmitting end and the receiving end, the transmitting end may be a network side, the receiving end may be a UE, i.e., the system includes the network side and the UE.

In a possible implementation mode, in response to determining that the receiving end is in an idle state, the second paging mode is the sweeping mode by default.

In a possible implementation mode, in response to determining that the receiving end is in a connected state, the second paging mode is the trigger mode by default.

In a possible implementation mode, in response to determining that the number of beams is greater than a third threshold, the second paging mode is the combination mode by default.

In response to determining that a single-frequency network is used, the second paging mode is configured to be the combination mode by default.

The paging method provided by the embodiment of the present disclosure may be configured in different modes according to different load conditions, different message types, or different ranges, which can ensure that the traffic channel blocking is not too much, avoid excessive invalid and useless uplink access procedures, and take requirements for network deployment and resource scheduling into account.

### Embodiment ten

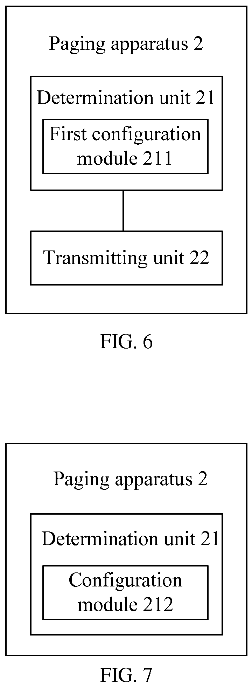

An embodiment of the present disclosure provides a paging apparatus 2. As shown in FIG. 6, the apparatus includes: a determination unit 21, which is configured to determine a paging mode for a receiving end. The paging mode includes at least one of: a sweeping mode, a trigger mode or a combination mode.

In one embodiment, as shown in FIG. 6, the determination unit 21 includes: a first configuration module 211, which is configured to configure a first paging mode for the receiving end, where the first paging mode includes at least one of: the sweeping mode, the trigger mode or the combination mode.

In one embodiment, as shown in FIG. 7, the determination unit 21 includes: a configuration module 212, which is configured to preset a second paging mode between the transmitting end and the receiving end.

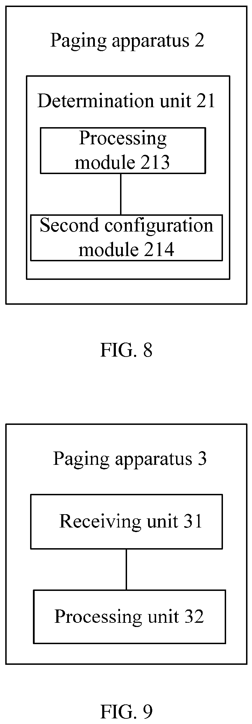

In one embodiment, as shown in FIG. 8, the determination unit 21 includes: a processing module 231, which is configured to use an initial paging mode between the transmitting end and the receiving end, and is further configured to indicate paging mode switch to the receiving end.

In one embodiment, the first configuration module 211 is configured to configure the first paging mode through paging mode configuration signaling, where the paging mode configuration signaling at least includes one of: UE-specific paging mode configuration signaling, PO-specific paging mode configuration signaling, PF-specific paging mode configuration signaling, TRP-specific paging mode configuration signaling, cell-specific paging mode configuration signaling, or TA-specific paging mode configuration signaling.

In one embodiment, the paging mode configuration signaling includes: using three states of an A-bit binary number to indicate the sweeping mode, the trigger mode and the combination mode respectively, and another state is reserved, where A is a natural number.

In one embodiment, the paging mode configuration signaling includes: using two states of a B-bit binary to indicate any two of the sweeping mode, the trigger mode and the combination mode respectively, where B is a natural number.

In one embodiment, in response to determining that the first paging mode is the sweeping mode or the combination mode, the first configuration module 211 is configured to configure a power saving state through power saving state configuration signaling, and the power saving state configuration signaling at least includes one of: UE-specific power saving state configuration signaling, PO-specific power saving state configuration signaling, PF-specific power saving state configuration signaling, TRP-specific power saving state configuration signaling, cell-specific power saving state configuration signaling, or TA-specific power saving state configuration signaling.

In one embodiment, the power saving state configuration signaling includes: using two states of a C-bit binary number to indicate a power saving state and a non-power-saving state respectively, where C is a natural number.

In one embodiment, the first configuration module 211 is further configured with a trigger mode through trigger state configuration signaling, and the trigger state configuration signaling at least includes one of: UE-specific trigger state configuration signaling, PO-specific trigger state configuration signaling, PF-specific trigger state configuration signaling, TRP-specific trigger state configuration signaling, cell-specific trigger state configuration signaling, or TA-specific trigger state configuration signaling.

In one embodiment, the trigger state configuration signaling includes: using two states of a D-bit binary number to indicate a trigger state and a non-trigger state respectively, where D is a natural number.

In one embodiment, a transmitting occasion of the trigger state configuration signaling are same and a PO are same.

Alternatively, the transmitting occasion of the trigger state configuration signaling is ahead of the PO.

In one embodiment, as shown in FIG. 6, the apparatus further includes: a transmitting unit 22, which is configured to, in the trigger state, transmit a paging message through a traffic channel after the receiving end reports a selected beam.

Alternatively, transmitting unit 22 is configured to, in the trigger state, after the receiving end reports the selected beam, transmit the paging message through a downlink random access response (RAR) message corresponding to uplink random access.

In one embodiment, as shown in FIG. 8, the determination unit 21 further includes: a second configuration module 214, which is configured to configure the initial paging mode through the transmitting end to the receiving end.

Alternatively, the processing module 213 is configured to preset the initial paging mode between the transmitting end and the receiving end.

In one embodiment, the processing module 213 is configured to indicate paging mode switch through paging mode switch signaling, where the paging mode switch signaling at least includes one of: UE-specific paging mode switch signaling, PO-specific paging mode switch signaling, PF-specific paging mode switch signaling, TRP-specific paging mode switch signaling, cell-specific paging mode switch signaling, or TA-specific paging mode switch signaling.

In one embodiment, the paging mode switch signaling includes: using three states of an E-bit binary number to indicate maintaining the initial paging mode, switching to a first non-initial paging mode, and switching to a second non-initial paging mode, and another state is reserved, where E is a natural number.

In one embodiment, the paging mode switch signaling includes: using two states of an F-bit binary number to indicate maintaining the initial paging mode and switching to a non-initial paging mode, where F is a natural number.

In one embodiment, in response to determining that a paging message is a modification message or an indication message, the first paging mode is the sweeping mode.

In one embodiment, in response to determining that the transmitting end and the receiving end do not have transmission-reception reciprocity, the first paging mode is the sweeping mode.

In response to determining that the transmitting end and/or the receiving end have transmission-reception reciprocity, the first paging mode is the trigger mode.

In one embodiment, in response to determining that an uplink access load is greater than a first threshold, the first paging mode is the sweeping mode.

In response to determining that a downlink access load is greater than a second threshold, the first paging mode is the trigger mode.

In one embodiment, in response to determining that the receiving end is in an idle state, the first paging mode is the sweeping mode.

In response to determining that the receiving end is in a connected state, the first paging mode is the trigger mode.

In one embodiment, in response to determining that the paging message includes an S-TMSI or an IMSI to which a UE belongs, the first paging mode is the trigger mode.

In one embodiment, in response to determining that the number of beams is greater than a third threshold, the first paging mode is the combination mode.

In one embodiment, in response to determining that a single-frequency network is used, the first paging mode is the combination mode.

In one embodiment, in response to determining that the receiving end is in an idle state, the second paging mode is the sweeping mode.

In response to determining that the receiving end is in a connected state, the second paging mode is the trigger mode.

In one embodiment, in response to determining that the number of beams is greater than a third threshold, the second paging mode is the combination mode.

In one embodiment, in response to determining that a single-frequency network is used, the second paging mode is the combination mode.

For the understanding of the paging apparatus provided by the embodiment of the present invention, reference may be made to the above paging method embodiment, which will not be repeated here.

The paging apparatus provided by the embodiment of the present disclosure may be configured in different modes according to different load conditions, different message types, or different ranges, which can ensure that the traffic channel blocking is not too much, avoid excessive invalid and useless uplink access procedures, and take requirements for network deployment and resource scheduling into account.

### Embodiment eleven

An embodiment of the present disclosure further provides a paging apparatus 3. As shown in FIG. 9, the apparatus may include: a receiving unit 31, which is configured to receive a paging message according to a paging mode determined by a transmitting end for a receiving end, where the paging mode includes at least one of: a sweeping mode, a trigger mode or a combination mode.

In one embodiment, the receiving unit 31 is further configured to receive the paging message according to a first paging mode configured by the transmitting end, where the first paging mode includes at least one of the sweeping mode, the trigger mode or the combination mode.

In one embodiment, the receiving unit 31 is further configured to receive the paging message according to a second paging mode preset between the transmitting end and the receiving end.

In one embodiment, the receiving unit 31 is further configured to receive the paging message according to the initial paging mode between the transmitting end and the receiving end, and is further configured to receive the paging message according to the paging mode switch indicated by the transmitting end to the receiving end.

In one embodiment, the first paging mode is configured through paging mode configuration signaling, and the paging mode configuration signaling includes at least one of: UE-specific paging mode configuration signaling, PO-specific paging mode configuration signaling, PF-specific paging mode configuration signaling, TRP-specific paging mode configuration signaling, cell-specific paging mode configuration signaling, or TA-specific paging mode configuration signaling.

In one embodiment, the paging mode configuration signaling includes: using three states of an A-bit binary number to indicate the sweeping mode, the trigger mode and the combination mode respectively, and another state is reserved, where A is a natural number.

Alternatively, the paging mode configuration signaling includes: using two states of a B-bit binary number to indicate any two of the sweeping mode, the trigger mode or the combination mode respectively, where B is a natural number.

In one embodiment, in response to determining that the first paging mode is the sweeping mode or the combination mode, the receiving unit 31 is configured to receive a paging message according to a configured power saving state, where the power saving state is configured through power saving state configuration signaling. The power saving state configuration signaling at least includes one of: UE-specific power saving state configuration signaling, PO-specific power saving state configuration signaling, PF-specific power saving state configuration signaling, TRP-specific power saving state configuration signaling, cell-specific power saving state configuration signaling, or TA-specific power saving state configuration signaling.

In one embodiment, the power saving state configuration signaling includes: using two states of a C-bit binary number to indicate a power saving state and a non-power-saving state respectively, where C is a natural number.

In one embodiment, as shown in FIG. 9, the apparatus further includes a processing unit 32, which is configured to, in the non-power-saving state, detect corresponding paging scheduling information at a PO.

In one embodiment, the trigger mode is configured through trigger state configuration signaling, and the trigger state configuration signaling includes at least one of: UE-specific trigger state configuration signaling, PO-specific trigger state configuration signaling, PF-specific trigger state configuration signaling, TRP-specific trigger state configuration signaling, cell-specific trigger state configuration signaling, or TA-specific trigger state configuration signaling.

In one embodiment, the trigger state configuration signaling includes: using two states of a D-bit binary number to indicate a trigger state and a non-trigger state respectively, where D is a natural number.

In one embodiment, as shown in the figure, the apparatus further includes a processing unit 32, which is configured to, in a trigger state, detect corresponding paging scheduling information at a PO.

In one embodiment, a transmitting occasion of the trigger state configuration signaling and the PO are same.

Alternatively, the transmitting occasion of the trigger state configuration signaling is ahead of the PO.

In one embodiment, the initial paging mode is configured through the transmitting end to the receiving end.

Alternatively, the initial paging mode is preset between the transmitting end and the receiving end.

In one embodiment, the paging mode switch is indicated through paging mode switch signaling, and the paging mode switch signaling includes at least one of: UE-specific paging mode switch signaling, PO-specific paging mode switch signaling, PF-specific paging mode switch signaling, TRP-specific paging mode switch signaling, cell-specific paging mode switch signaling, or TA-specific paging mode switch signaling.

In one embodiment, the paging mode switch signaling includes: using three states of an E-bit binary number to indicate maintaining the initial paging mode, switching to a first non-initial paging mode, and switching to a second non-initial paging mode, and another state is reserved, where E is a natural number.

In one embodiment, the paging mode switch signaling includes: using two states of an F-bit binary number to indicate maintaining the initial paging mode and switching to a non-initial paging mode, where F is a natural number.

In one embodiment, in response to determining that the paging message is a modification message or an indication message, the first paging mode is the sweeping mode.

In one embodiment, in response to determining that the transmitting end and the receiving end do not have transmission-reception reciprocity, the first paging mode is the sweeping mode.

In response to determining that the transmitting end and/or the receiving end have transmission-reception reciprocity, the first paging mode is the trigger mode.

In one embodiment, in response to determining that an uplink access load is greater than a first threshold, the first paging mode is the sweeping mode.

In response to determining that a downlink access load is greater than a second threshold, the first paging mode is the trigger mode.

In one embodiment, in response to determining that the receiving end is in an idle state, the first paging mode is the sweeping mode.

In response to determining that the receiving end is in a connected state, the first paging mode is the trigger mode.

In one embodiment, in response to determining that the paging message includes an S-TMSI or an IMSI to which a UE belongs, the first paging mode is the trigger mode.

In one embodiment, in response to determining that the number of beams is greater than a third threshold, the first paging mode is the combination mode.

In one embodiment, in response to determining that a single-frequency network is used, the first paging mode is the combination mode.

In one embodiment, in response to determining that the receiving end is in an idle state, the second paging mode is the sweeping mode.

In response to determining that the receiving end is in a connected state, the second paging mode is the trigger mode.

In one embodiment, in response to determining that the number of beams is greater than a third threshold, the second paging mode is the combination mode.

In one embodiment, in response to determining that a single-frequency network is used, the second paging mode is the combination mode.

For the understanding of the paging apparatus provided by the embodiment of the present invention, reference may be made to the above paging method embodiment, which will not be repeated here.

The paging apparatus provided by the embodiment of the present disclosure may be configured in different modes according to different load conditions, different message types, or different ranges, which can ensure that the traffic channel blocking is relieved, avoid excessive invalid and useless uplink access procedures, and take requirements for network deployment and resource scheduling into account.

### Embodiment twelve

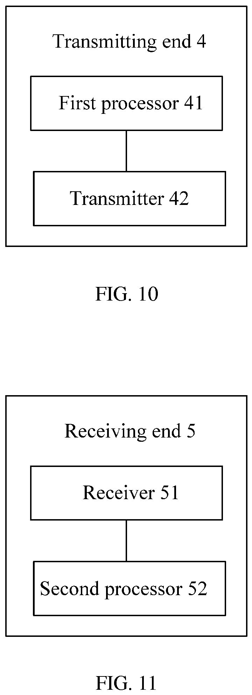

An embodiment of the present disclosure provides a transmitting end 4. As shown in FIG. 10, the transmitting end includes: a first processor 41, which is configured to determine a paging mode for a receiving end. The paging mode includes at least one of: a sweeping mode, a trigger mode or a combination mode.

In one embodiment, the first processor 41 is further configured to configure a first paging mode for the receiving end, where the first paging mode includes at least one of: the sweeping mode, the trigger mode or the combination mode.

In one embodiment, the first processor 41 is further configured to preset a second paging mode between the transmitting end and the receiving end.

In one embodiment, the first processor 41 is further configured to use an initial paging mode between the transmitting end and the receiving end, and the transmitting end indicates paging mode switch to the receiving end.

In one embodiment, the first paging mode is configured through paging mode configuration signaling, and the paging mode configuration signaling at least includes one of: UE-specific paging mode configuration signaling, PO-specific paging mode configuration signaling, PF-specific paging mode configuration signaling, TRP-specific paging mode configuration signaling, cell-specific paging mode configuration signaling, or TA-specific paging mode configuration signaling.

In one embodiment, the paging mode configuration signaling includes: using three states of an A-bit binary number to indicate the sweeping mode, the trigger mode and the combination mode respectively, and another state is reserved, where A is a natural number.

In one embodiment, the paging mode configuration signaling includes: using two states in a B-bit binary to indicate any two of the sweeping mode, the trigger mode and the combination mode respectively, where B is a natural number.

In one embodiment, in response to determining that the first paging mode is the sweeping mode or the combination mode, the first processor 41 is further configured to configure a power saving state through power saving state configuration signaling. The power saving state configuration signaling at least includes one of: UE-specific power saving state configuration signaling, PO-specific power saving state configuration signaling, PF-specific power saving state configuration signaling, TRP-specific power saving state configuration signaling, cell-specific power saving state configuration signaling, or TA-specific power saving state configuration signaling.

In one embodiment, the power saving state configuration signaling includes: using two states of a C-bit binary number to indicate a power saving state and a non-power-saving state respectively, where C is a natural number.

In one embodiment, the first processor 41 is further configured with a trigger mode through trigger state configuration signaling, and the trigger state configuration signaling at least includes one of: UE-specific trigger state configuration signaling, PO-specific trigger state configuration signaling, PF-specific trigger state configuration signaling, TRP-specific trigger state configuration signaling, cell-specific trigger state configuration signaling, or TA-specific trigger state configuration signaling.

In one embodiment, the trigger state configuration signaling includes: using two states of a D-bit binary number to indicate a trigger state and a non-trigger state respectively, where D is a natural number.

In one embodiment, the transmitting occasion of the trigger state configuration signaling and a PO are same.

Alternatively, the transmitting occasion of the trigger state configuration signaling is ahead of the PO.

In one embodiment, the transmitting end further includes: a transmitter 42, which is configured to, in the trigger state, transmit a paging message through a traffic channel after the receiving end reports a selected beam.; or is configured to

Alternatively, the transmitter 42 is configured to, in the trigger state, after the receiving end reports the selected beam, transmit the paging message through a downlink random access response (RAR) message corresponding to uplink random access.

In one embodiment, the first processor 41 is further configured to configure the initial paging mode to the receiving end through the transmitting end.

Alternatively, the first processor 41 is further configured to preset the initial paging mode between the transmitting end and the receiving end.

In one embodiment, the first processor 41 is further configured to indicate paging mode switch through paging mode switch signaling, and the paging mode switch signaling at least includes one of: UE-specific paging mode switch signaling, PO-specific paging mode switch signaling, PF-specific paging mode switch signaling, TRP-specific paging mode switch signaling, cell-specific paging mode switch signaling, or TA-specific paging mode switch signaling.

In one embodiment, the paging mode switch signaling includes: using three states of an E-bit binary number to indicate maintaining the initial paging mode, switching to a first non-initial paging mode, and switching to a second non-initial paging mode, and another state is reserved, where E is a natural number.

In one embodiment, the paging mode switch signaling includes: using two states of an F-bit binary number to indicate maintaining the initial paging mode and switching to a non-initial paging mode, where F is a natural number.

In one embodiment, in response to determining that the paging message is a modification message or an indication message, the first paging mode is the sweeping mode.

In one embodiment, in response to determining that the transmitting end and the receiving end do not have transmission-reception reciprocity, the first paging mode is the sweeping mode.
in response to determining that the transmitting end and/or the receiving end have transmission-reception reciprocity, the first paging mode is the trigger mode.

In one embodiment, in response to determining that an uplink access load is greater than a first threshold, the first paging mode is the sweeping mode;
in response to determining that a downlink access load is greater than a second threshold, the first paging mode is the trigger mode.

In one embodiment, in response to determining that the receiving end is in an idle state, the first paging mode is the sweeping mode.

In response to determining that the receiving end is in a connected state, the first paging mode is the trigger mode.

In one embodiment, in response to determining that the paging message includes an S-temporary mobile subscriber identity (S-TMSI) or an international mobile subscriber identity (IMSI) to which a UE belongs, the first paging mode is the trigger mode.

In one embodiment, in response to determining that the number of beams is greater than a third threshold, the first paging mode is the combination mode.

In one embodiment, in response to determining that a single-frequency network is used, the first paging mode is the combination mode.

In one embodiment, in response to determining that the receiving end is in an idle state, the second paging mode is the sweeping mode.

In response to determining that the receiving end is in a connected state, the second paging mode is the trigger mode.

In one embodiment, in response to determining that the number of beams is greater than a third threshold, the second paging mode is the combination mode.

In one embodiment, in response to determining that a single-frequency network is used, the second paging mode is the combination mode.

For the understanding of the transmitting end provided by the embodiment of the present disclosure, reference may be made to the above paging method embodiment, which will not be repeated here.

The transmitting end provided by the embodiment of the present disclosure may be configured in different modes according to different load conditions, different message types, or different ranges, which can ensure that the traffic channel blocking is not too much, avoid excessive invalid and useless uplink access procedures, and take requirements for network deployment and resource scheduling into account.

### Embodiment thirteen

An embodiment of the present disclosure provides a receiving end 5. As shown in FIG. 11, the receiving end includes: a receiver 51, which is configured to receive a paging message according to a paging mode determined by a transmitting end for a receiving end, and the paging mode includes at least one of: a sweeping mode, a trigger mode or a combination mode.

In one embodiment, the receiver 51 is further configured to receive the paging message according to a first paging mode configured by the transmitting end, and the first paging mode includes at least one of the sweeping mode, the trigger mode or the combination mode.

In one embodiment, the receiver 51 is further configured to receive the paging message according to a second paging mode preset between the transmitting end and the receiving end.

In one embodiment, the receiver 51 is further configured to receive the paging message according to the initial paging mode between the transmitting end and the receiving end, and is further configured to receive the paging message according to the paging mode switch indicated by the transmitting end to the receiving end.

In one embodiment, the first paging mode is configured through paging mode configuration signaling, and the paging mode configuration signaling includes at least one of: UE-specific paging mode configuration signaling, PO-specific paging mode configuration signaling, PF-specific paging mode configuration signaling, TRP-specific paging mode configuration signaling, cell-specific paging mode configuration signaling, or TA-specific paging mode configuration signaling.

In one embodiment, the paging mode configuration signaling includes: using three states of an A-bit binary number to indicate the sweeping mode, the trigger mode and the combination mode respectively, and another state is reserved, where A is a natural number.

Alternatively, the paging mode configuration signaling includes: using two states of a B-bit binary number to indicate any two of the sweeping mode, the trigger mode and the combination mode respectively, where B is a natural number.

In one embodiment, in response to determining that the first paging mode is the sweeping mode or the combination mode, the receiver 51 is configured to receive the paging message according to a configured power saving state. The power saving state is configured through power saving state configuration signaling, and the power saving state configuration signaling at least includes one of: UE-specific power saving state configuration signaling, PO-specific power saving state configuration signaling, PF-specific power saving state configuration signaling, TRP-specific power saving state configuration signaling, cell-specific power saving state configuration signaling, or TA-specific power saving state configuration signaling.

In one embodiment, the power saving state configuration signaling includes: using two states of a C-bit binary number to indicate a power saving state and a non-power-saving state respectively, where C is a natural number.

In one embodiment, the receiving end further includes: a second processor 52, which is configured to, in the non-power-saving state, detect corresponding paging scheduling information at a PO.

In one embodiment, the trigger mode is configured through trigger state configuration signaling, and the trigger state configuration signaling includes at least one of: UE-specific trigger state configuration signaling, PO-specific trigger state configuration signaling, PF-specific trigger state configuration signaling, TRP-specific trigger state configuration signaling, cell-specific trigger state configuration signaling, or TA-specific trigger state configuration signaling.

In one embodiment, the trigger state configuration signaling includes: using two states of a D-bit binary number to indicate a trigger state and a non-trigger state respectively, where D is a natural number.

In one embodiment, the receiving end further includes: a second processor 52, which is configured to, in the power saving state, detect corresponding paging scheduling information at the PO.

In one embodiment, the transmitting occasion of the trigger state configuration signaling and the PO are same.

Alternatively, the transmitting occasion of the trigger state configuration signaling is ahead of the PO.

In one embodiment, the initial paging mode is configured through the transmitting end to the receiving end.

Alternatively, the initial paging mode is preset between the transmitting end and the receiving end.

In one embodiment, the paging mode switch is indicated through paging mode switch signaling, and the paging mode switch signaling includes at least one of: UE-specific paging mode switch signaling, PO-specific paging mode switch signaling, PF-specific paging mode switch signaling, TRP-specific paging mode switch signaling, cell-specific paging mode switch signaling, or TA-specific paging mode switch signaling.

In one embodiment, the paging mode switch signaling includes: using three states of an E-bit binary number to indicate maintaining the initial paging mode, switching to a first non-initial paging mode, and switching to a second non-initial paging mode, and another state is reserved, where E is a natural number.

In one embodiment, the paging mode switch signaling includes: using two states of an F-bit binary number to indicate maintaining the initial paging mode and switching to a non-initial paging mode, where F is a natural number.

In one embodiment, in response to determining that the paging message is a modification message or an indication message, the first paging mode is the sweeping mode.

In one embodiment, in response to determining that the transmitting end and the receiving end do not have transmission-reception reciprocity, the first paging mode is the sweeping mode.

In response to determining that the transmitting end and/or the receiving end have transmission-reception reciprocity, the first paging mode is the trigger mode.

In one embodiment, in response to determining that an uplink access load is greater than a first threshold, the first paging mode is the sweeping mode.

In response to determining that a downlink access load is greater than a second threshold, the first paging mode is the trigger mode.

In one embodiment, in response to determining that the receiving end is in an idle state, the first paging mode is the sweeping mode.

In response to determining that the receiving end is in a connected state, the first paging mode is the trigger mode.

In one embodiment, in response to determining that the paging message includes an S-TMSI or an IMSI to which a UE belongs, the first paging mode is the trigger mode.

In one embodiment, in response to determining that the number of beams is greater than a third threshold, the first paging mode is the combination mode.

In one embodiment, in response to determining that a single-frequency network is used, the first paging mode is the combination mode.

In one embodiment, in response to determining that the receiving end is in an idle state, the second paging mode is the sweeping mode.

In response to determining that the receiving end is in a connected state, the second paging mode is the trigger mode.

In one embodiment, in response to determining that the number of beams is greater than a third threshold, the second paging mode is the combination mode.

In one embodiment, in response to determining that a single-frequency network is used, the second paging mode is the combination mode.

For the understanding of the receiving end provided by the embodiment of the present disclosure, reference may be made to the above paging method embodiment, which will not be repeated here.

The receiving end provided by the embodiment of the present disclosure may be configured in different modes according to different load conditions, different message types, or different ranges, which can ensure that the traffic channel blocking is not too much, avoid excessive invalid and useless uplink access procedures, and take requirements for network deployment and resource scheduling into account.

An embodiment of the present disclosure further provides a paging system. The system at least includes a transmitting end and a receiving end. The system may be configured in different modes according to different load conditions, different message types, or different ranges, which can ensure that the traffic channel blocking is not too much, avoid excessive invalid and useless uplink access procedures, and take requirements for network deployment and resource scheduling into account.

An embodiment of the present invention further provides a computer storage medium. The computer storage medium stores a computer program, which is configured to execute the above paging method provided by the present invention.

It should be understood by those skilled in the art that the embodiments of the present disclosure may be provided as methods, systems or computer program products. Therefore, the present disclosure may be implemented by hardware, software, or a combination of hardware and software. In addition, the present disclosure may take the form of a computer program product implemented in one or more computer-usable storage media (including, but not limited to, a disk memory and an optical memory) that includes computer-usable program codes.

The present disclosure is described with reference to flowcharts and/or block diagrams of methods, devices (systems) and computer program products according to the embodiments of the present disclosure. It should be understood that computer program instructions may implement each flow and/or block in the flowcharts and/or block diagrams and a combination of flows and/or blocks in the flowcharts and/or block diagrams. These computer program instructions may be provided to a general-purpose computer, a special-purpose computer, an embedded processor or a processor of another programmable data processing device to produce a machine so that instructions executed by a computer or the processor of another programmable data processing device produce a means for implementing functions specified in one or more flows in the flowcharts and/or one or more blocks in the block diagrams.

These computer program instructions may also be stored in a computer-readable memory which may direct the computer or another programmable data processing device to operate in a particular manner so that the instructions stored in the computer-readable memory produce a manufactured product including an instructing means. The instructing means implements the functions specified in one or more flows in the flowcharts and/or one or more blocks in the block diagrams.

These computer program instructions may also be loaded onto the computer or another programmable data processing device so that a series of operation steps are performed on the computer or another programmable device to produce processing implemented by the computer. Therefore, instructions executed on the computer or another programmable device provide steps for implementing the functions specified in one or more flows in the flowcharts and/or one or more blocks in the block diagrams.

The above are only preferred embodiments of the present disclosure and are not intended to limit the scope of the present disclosure.

### INDUSTRIAL APPLICABILITY

In embodiments of the present invention, a transmitting end determines a paging mode for a receiving end, and the paging mode includes at least one of: a sweeping mode, a trigger mode or a combination mode. In this way, the traffic channel blocking is fewer, excessive invalid and useless uplink access procedures are avoided, and requirements for both network deployment and resource scheduling are taken into account.

## Claims

1. A paging method, comprising:
configuring (101), by a transmitting end, paging mode configuration signaling and trigger state configuration signaling to a receiving end;
determining, by the transmitting end, a paging mode for the receiving end, wherein the paging mode comprises at least one of: a sweeping mode, a trigger mode, or a combination mode, wherein the sweeping mode comprises a paging mode wherein a paging information is repeatedly transmitted with all beams of the transmitting end, the trigger mode comprises a paging mode wherein the transmitting end triggers the receiving end to report an available downlink beam in advance, and the transmitting end transmits a paging information according to the received available downlink beam reported by the receiving end, and the combination mode comprises a paging mode wherein a transmission of a paging information is repeated in an omnidirectional mode, or a single frequency network, SFN, transmission mode; **characterized in that**,
two states of 1-bit binary paging mode configuration signaling respectively indicate the sweeping mode and the trigger mode, and two states of 1-bit binary trigger state configuration signaling respectively indicate a trigger state and a non-trigger state; and
in a case where a bit of the paging mode configuration signaling "0" is received by the receiving end, the paging mode of the receiving end is determined as the sweeping mode, and in a case where a bit of the paging mode configuration signaling "1" is received by the receiving end, the paging mode of the receiving end is determined as the trigger mode.

2. The method of claim 1, wherein determining, by the transmitting end, the paging mode for the receiving end comprises:
configuring, by the transmitting end, a first paging mode for the receiving end, wherein the first paging mode comprises at least one of: the sweeping mode, the trigger mode, or the combination mode.

3. The method of claim 1, wherein determining, by the transmitting end, the paging mode for the receiving end comprises:
presetting a second paging mode between the transmitting end and the receiving end.

4. The method of claim 1, wherein determining, by the transmitting end, the paging mode for the receiving end comprises:
using an initial paging mode between the transmitting end and the receiving end, and indicating, by the transmitting end, to the receiving end paging mode switch.

5. The method of claim 2, wherein the first paging mode is configured through paging mode configuration signaling, and the paging mode configuration signaling at least comprises one of: user equipment specific, UE-specific, paging mode configuration signaling; paging occasion specific, PO-specific, paging mode configuration signaling; paging frame specific, PF-specific, paging mode configuration signaling; transmission reception point specific, TRP-specific, paging mode configuration signaling; cell-specific paging mode configuration signaling, or track area specific, TA-specific, paging mode configuration signaling,
wherein the paging mode configuration signaling comprises: indicating the sweeping mode, the trigger mode and the combination mode by using three states of an A-bit binary number, where another state is reserved, and A is a natural number; or indicating any two of the sweeping mode, the trigger mode, or the combination mode by using two states of a B-bit number, where B is a natural number.

6. The method of claim 2, wherein in response to determining that the first paging mode is the sweeping mode or the combination mode, the method further comprises:
configuring a power saving state through power saving state configuration signaling, wherein the power saving state configuration signaling at least comprises one of: UE-specific power saving state configuration signaling, PO-specific power saving state configuration signaling, PF-specific power saving state configuration signaling, TRP-specific power saving state configuration signaling, cell-specific power saving state configuration signaling, or TA-specific power saving state configuration signaling,
wherein the power saving state comprises: indicating a power saving state and a non-power-saving state by using two states of a C-bit binary number, and C is a natural number.

7. The method of claim 2, wherein the trigger mode is configured through trigger state configuration signaling, and the trigger state configuration signaling at least comprises one of: UE-specific trigger state configuration signaling, PO-specific trigger state configuration signaling, PF-specific trigger state configuration signaling, TRP-specific trigger state configuration signaling, cell-specific trigger state configuration signaling, or TA-specific trigger state configuration signaling;
wherein the trigger state configuration signaling comprises: indicating a trigger state and a non-trigger state by using two states of a D-bit binary number, and D is a natural number;
or
wherein a transmitting occasion of the trigger state configuration signaling and a paging occasion, PO, are same; or the transmitting occasion of the trigger state configuration signaling is ahead of the PO;
or
wherein in the trigger state, after the receiving end reports a selected beam, a traffic channel is used for transmitting a paging message; or in the trigger state, after the receiving end reports the selected beam, a downlink random access response, RAR, message corresponding to uplink random access is used for transmitting the paging message.

8. The method of claim 4, wherein using the initial paging mode between the transmitting end and the receiving end comprises:
configuring the initial paging mode for the receiving end through the transmitting end; or
presetting, by the transmitting end and the receiving end, the initial paging mode.

9. The method of claim 4 or 8, wherein the paging mode switch is indicated through paging mode switch signaling, and the paging mode switch signaling at least comprises one of: UE-specific paging mode switch signaling, PO-specific paging mode switch signaling, PF-specific paging mode switch signaling, TRP-specific paging mode switch signaling, cell-specific paging mode switch signaling, or TA-specific paging mode switch signaling,
wherein the paging mode switch signaling comprises: indicating maintaining the initial paging mode, switching to a first non-initial paging mode, and switching to a second non-initial paging mode by using three states of an E-bit binary, where another state is reserved, and E is a natural number; or wherein the paging mode switch signaling comprises: indicating maintaining the initial paging mode and switching to a non-initial paging mode by using two states of an F-bit binary, where F is a natural number.

10. A paging method, comprising:
receiving a paging message according to a paging mode determined by a transmitting end for a receiving end, wherein the paging mode comprises at least one of: a sweeping mode, a trigger mode, or a combination mode, wherein the sweeping mode comprises a paging mode wherein a paging information is repeatedly transmitted with all beams of the transmitting end, the trigger mode comprises a paging mode wherein the transmitting end triggers the receiving end to report an available downlink beam in advance, and the transmitting end transmits a paging information according to the received available downlink beam reported by the receiving end, and the combination mode comprises a paging mode wherein a transmission of a paging information is repeated in an omnidirectional mode, or a single frequency network, SFN, transmission mode;
wherein the receiving end is configured with paging mode configuration signaling and trigger state configuration signaling by the transmitting end; **characterized in that**,
two states of 1-bit binary paging mode configuration signaling respectively indicate the sweeping mode and the trigger mode, and two states of 1-bit binary trigger state configuration signaling respectively indicate a trigger state and a non-trigger state; and
in a case where a bit of the paging mode configuration signaling "0" is received by the receiving end, the paging mode of the receiving end is determined as the sweeping mode, and in a case where a bit of the paging mode configuration signaling "1" is received by the receiving end, the paging mode of the receiving end is determined as the trigger mode.

11. The method of claim 10, wherein receiving the paging message according to the paging mode determined by the transmitting end for the receiving end comprises:
receiving the paging message according to a first paging mode configured by the transmitting end, wherein the first paging mode comprises at least one of: the sweeping mode, the trigger mode, or the combination mode.

12. The method of claim 10, wherein receiving the paging message according to the paging mode determined by the transmitting end for the receiving end comprises:
receiving the paging message according to a preset second paging mode between the transmitting end and the receiving end.

13. The method of claim 10, wherein receiving the paging message according to the paging mode determined by the transmitting end for the receiving end comprises:
receiving the paging message according to an initial paging mode used in between the transmitting end and the receiving end, receiving the paging message according to paging mode switch indicated by the transmitting end to the receiving end;
wherein the initial paging mode is configured by the transmitting end to the receiving end; or the initial paging mode is preset by the transmitting end and the receiving end.

14. A paging apparatus (2), comprising:
a configuration unit, configured to configure paging mode configuration signaling and trigger state configuration signaling to a receiving end;
a determination unit (21), configured to determine a paging mode for the receiving end, wherein the paging mode comprises at least one of: a sweeping mode, a trigger mode, or a combination mode, wherein the sweeping mode comprises a paging mode wherein a paging information is repeatedly transmitted with all beams of the transmitting end, the trigger mode comprises a paging mode wherein the transmitting end triggers the receiving end to report an available downlink beam in advance, and the transmitting end transmits a paging information according to the received available downlink beam reported by the receiving end, and the combination mode comprises a paging mode wherein a transmission of a paging information is repeated in an omnidirectional mode, or a single frequency network, SFN, transmission mode; **characterized in that**,
two states of 1-bit binary paging mode configuration signaling respectively indicate the sweeping mode and the trigger mode, and two states of 1-bit binary trigger state configuration signaling respectively indicate a trigger state and a non-trigger state; and
in a case where a bit of the paging mode configuration signaling "0" is received by the receiving end, the paging mode of the receiving end is determined as the sweeping mode, and in a case where a bit of the paging mode configuration signaling "1" is received by the receiving end, the paging mode of the receiving end is determined as the trigger mode.

15. A paging apparatus (3), comprising:
a receiving unit (31), configured to receive a paging message according to a paging mode determined by a transmitting end for a receiving end, wherein the paging mode comprises at least one of: a sweeping mode, a trigger mode, or a combination mode, wherein the sweeping mode comprises a paging mode wherein a paging information is repeatedly transmitted with all beams of the transmitting end, the trigger mode comprises a paging mode wherein the transmitting end triggers the receiving end to report an available downlink beam in advance, and the transmitting end transmits a paging information according to the received available downlink beam reported by the receiving end, and the combination mode comprises a paging mode wherein a transmission of a paging information is repeated in an omnidirectional mode, or a single frequency network, SFN, transmission mode;
wherein the receiving end is configured with paging mode configuration signaling and trigger state configuration signaling by the transmitting end; **characterized in that**,
two states of 1-bit binary paging mode configuration signaling respectively indicate the sweeping mode and the trigger mode, and two states of 1-bit binary trigger state configuration signaling respectively indicate a trigger state and a non-trigger state; and
in a case where a bit of the paging mode configuration signaling "0" is received by the receiving end, the paging mode of the receiving end is determined as the sweeping mode, and in a case where a bit of the paging mode configuration signaling "1" is received by the receiving end, the paging mode of the receiving end is determined as the trigger mode.

## Patentansprüche

1. Funkrufverfahren, umfassend:
Konfigurieren (101) von Funkrufmodus-Konfigurationssignalisierung und Auslöserzustand-Konfigurationssignalisierung durch eine Übertragungsseite für eine Empfangsseite;
Bestimmen eines Funkrufmodus durch die Übertragungsseite für die Empfangsseite, wobei der Funkrufmodus mindestens einen von Folgenden umfasst: einen Wobbelmodus, einen Auslösermodus oder einen Kombinationsmodus, wobei der Wobbelmodus einen Funkrufmodus umfasst, wobei Funkrufinformationen wiederholt mit allen Trägern der Übertragungsseite übertragen werden, der Auslösermodus einen Funkrufmodus umfasst, wobei die Übertragungsseite auslöst, dass die Empfangsseite einen verfügbaren Downlink-Träger im Voraus meldet, und die Übertragungsseite Funkrufinformationen gemäß dem empfangenen verfügbaren Downlink-Träger, der durch das Empfangsende gemeldet wird, überträgt und der Kombinationsmodus einen Funkrufmodus umfasst, wobei eine Übertragung von Funkrufinformationen in einem omnidirektionalen Modus oder einem Übertragungsmodus eines Einzelfrequenznetzwerks (single frequency netzwork - SFN) wiederholt wird; **dadurch gekennzeichnet, dass**
zwei Zustände der 1-Bit-Binärfunkrufmodus-Konfigurationssignalisierung den Wobbelmodus bzw. den Auslösermodus angeben und zwei Zustände der 1-Bit-Binärauslöserzustand-Konfigurationssignalisierung einen Auslöserzustand bzw. einen Nicht-Auslöserzustand angeben; und dass
in einem Fall, in dem ein Bit der Funkrufmodus-Konfigurationssignalisierung "0" durch die Empfangsseite empfangen wird, der Funkrufmodus der Empfangsseite als der Wobbelmodus bestimmt wird, und in einem Fall, in dem ein Bit der Funkrufmodus-Konfigurationssignalisierung "1" durch die Empfangsseite empfangen wird, der Funkrufmodus der Empfangsseite als der Auslösermodus bestimmt wird.

2. Verfahren nach Anspruch 1, wobei das Bestimmen des Funkrufmodus durch die Übertragungsseite für die Empfangsseite Folgendes umfasst:
Konfigurieren eines ersten Funkrufmodus durch die Übertragungsseite für die Empfangsseite, wobei der erste Funkrufmodus mindestens einen von Folgenden umfasst: den Wobbelmodus, den Auslösermodus oder den Kombinationsmodus.

3. Verfahren nach Anspruch 1, wobei das Bestimmen des Funkrufmodus durch die Übertragungsseite für die Empfangsseite Folgendes umfasst:
Voreinstellen eines zweiten Funkrufmodus zwischen der Übertragungsseite und der Empfangsseite.

4. Verfahren nach Anspruch 1, wobei das Bestimmen des Funkrufmodus durch die Übertragungsseite für die Empfangsseite Folgendes umfasst:
Verwenden eines anfänglichen Funkrufmodus zwischen der Übertragungsseite und der Empfangsseite und Angeben einer Funkrufmodusumschaltung durch die Übertragungsseite für die Empfangsseite.

5. Verfahren nach Anspruch 2, wobei der erste Funkrufmodus durch Funkrufmodus-Konfigurationssignalisierung konfiguriert ist und die Funkrufmodus-Konfigurationssignalisierung mindestens eine von Folgenden umfasst: benutzergerätspezifische, UE(user equipment)-spezifische, Funkrufmodus-Konfigurationssignalisierung; funkrufanlassspezifische, PO(paging occasion)-spezifische, Funkrufmodus-Konfigurationssignalisierung; funkrufrahmenspezifische, PF(paging frame)-spezifische, Funkrufmodus-Konfigurationssignalisierung; Übertragungs-Empfangspunktspezifische, TRP(transmission reception point)-spezifische, Funkrufmodus-Konfigurationssignalisierung; zellenspezifische Funkrufmodus-Konfigurationssignalisierung oder spurbereichsspezifische, TA(track area)-spezifische, Funkrufmodus-Konfigurationssignalisierung,
wobei die Funkrufmodus-Konfigurationsignalisierung Folgendes umfasst: Angeben des Wobbelmodus, des Auslösermodus und des Kombinationsmodus unter Verwendung von drei Zuständen einer A-Bit-Binärzahl, wobei ein anderer Zustand reserviert ist und A eine natürliche Zahl ist; oder Angeben von zwei von dem Wobbelmodus, dem Auslösermodus oder dem Kombinationsmodus unter Verwendung von zwei Zuständen einer B-Bit-Zahl, wobei B eine natürliche Zahl ist.

6. Verfahren nach Anspruch 2, wobei das Verfahren als Reaktion auf das Bestimmen, dass der erste Funkrufmodus der Wobbelmodus oder der Kombinationsmodus ist, ferner Folgendes umfasst:
Konfigurieren eines Leistungssparzustands durch eine Leistungssparzustand-Konfigurationssignalisierung, wobei die Leistungssparzustand-Konfigurationssignalisierung mindestens eine von Folgenden umfasst: UE-spezifische Leistungssparzustand-Konfigurationssignalisierung, PO-spezifische Leistungssparzustand-Konfigurationssignalisierung, PF-spezifische Leistungssparzustand-Konfigurationssignalisierung, TRP-spezifische Leistungssparzustand-Konfigurationssignalisierung,
zellenspezifische Leistungssparzustand-Konfigurationssignalisierung oder TA-spezifische Leistungssparzustand-Konfigurationssignalisierung,
wobei der Leistungssparzustand Folgendes umfasst: Angeben eines Leistungssparzustands und eines Nicht-Leistungssparzustands unter Verwendung von zwei Zuständen einer C-Bit-Binärzahl, und C eine natürliche Zahl ist.

7. Verfahren nach Anspruch 2, wobei der Auslösermodus durch Auslöserzustand-Konfigurationssignalisierung konfiguriert ist und die Auslöserzustand-Konfigurationssignalisierung mindestens eine von Folgenden umfasst: UE-spezifische Auslöserzustand-Konfigurationssignalisierung, PO-spezifische Auslöserzustand-Konfigurationssignalisierung, PF-spezifische Auslöserzustand-Konfigurationssignalisierung, TRP-spezifische Auslöserzustand-Konfigurationssignalisierung, zellenspezifische Auslöserzustand-Konfigurationssignalisierung oder TA-spezifische Auslöserzustand-Konfigurationssignalisierung;
wobei die Auslöserzustand-Konfigurationssignalisierung Folgendes umfasst: Angeben eines Auslöserzustands und eines Nicht-Auslöserzustands unter Verwendung von zwei Zuständen einer D-Bit-Binärzahl, und D eine natürliche Zahl ist;
oder
wobei ein Übertragungsanlass der Auslöserzustand-Konfigurationssignalisierung und ein Funkrufanlass (paging occasion - PO) gleich sind; oder der Übertragungsanlass der Auslöserzustand-Konfigurationssignalisierung vor dem PO liegt;
oder
wobei in dem Auslöserzustand, nachdem die Empfangsseite einen ausgewählten Träger meldet, ein Verkehrskanal zum Übertragen einer Funkrufnachricht verwendet wird; oder in dem Auslöserzustand, nachdem die Empfangsseite den ausgewählten Träger meldet, eine Nachricht einer Downlink-Zufallszugriffsantwort (random access response - RAR), die dem Uplink-Zufallszugriff entspricht, zum Übertragen der Funkrufnachricht verwendet wird.

8. Verfahren nach Anspruch 4, wobei das Verwenden des anfänglichen Funkrufmodus zwischen der Übertragungsseite und der Empfangsseite Folgendes umfasst:
Konfigurieren des anfänglichen Funkrufmodus für die Empfangsseite über die Übertragungsseite; oder
Voreinstellen des anfänglichen Funkrufmodus durch die Übertragungsseite und die Empfangsseite.

9. Verfahren nach Anspruch 4 oder 8, wobei die Funkrufmodusumschaltung durch Funkrufmodus-Umschaltsignalisierung angegeben wird und die Funkrufmodus-Umschaltsignalisierung mindestens eine von Folgenden umfasst:
UE-spezifische Funkrufmodus-Umschaltsignalisierung, PO-spezifische Funkrufmodus-Umschaltsignalisierung, PF-spezifische Funkrufmodus-Umschaltsignalisierung, TRP-spezifische Funkrufmodus-Umschaltsignalisierung, zellenspezifische Funkrufmodus-Umschaltsignalisierung oder TA-spezifische Funkrufmodus-Umschaltsignalisierung,
wobei die Funkrufmodus-Umschaltsignalisierung Folgendes umfasst: Angeben des Aufrechterhaltens des anfänglichen Funkrufmodus, Umschalten in einen ersten nicht anfänglichen Funkrufmodus und Umschalten in einen zweiten nicht anfänglichen Funkrufmodus unter Verwendung von drei Zuständen einer E-Bit-Binärzahl, wobei ein anderer Zustand reserviert ist und E eine natürliche Zahl ist; oder wobei die Funkrufmodus-Umschaltsignalisierung Folgendes umfasst: Angaben des Aufrechterhalten des anfänglichen Funkrufmodus und Umschalten in einen nicht anfänglichen Funkrufmodus unter Verwendung von zwei Zuständen einer F-Bit-Binärzahl, wobei F eine natürliche Zahl ist.

10. Funkrufverfahren, umfassend:
Empfangen eine Funkrufnachricht gemäß einem Funkrufmodus, der durch eine Übertragungsseite für eine Empfangsseite bestimmt wird, wobei der Funkrufmodus mindestens einen von Folgenden umfasst: einen Wobbelmodus, einen Auslösermodus oder einen Kombinationsmodus, wobei der Wobbelmodus einen Funkrufmodus umfasst, wobei Funkrufinformationen wiederholt mit allen Trägern der Übertragungsseite übertragen werden, der Auslösermodus einen Funkrufmodus umfasst, wobei die Übertragungsseite auslöst, dass die Empfangsseite einen verfügbaren Downlink-Träger im Voraus meldet, und die Übertragungsseite Funkrufinformationen gemäß dem empfangenen verfügbaren Downlink-Träger, der durch das Empfangsende gemeldet wird, überträgt und der Kombinationsmodus einen Funkrufmodus umfasst, wobei eine Übertragung von Funkrufinformationen in einem omnidirektionalen Modus oder einem Übertragungsmodus eines Einzelfrequenznetzwerks (SFN) wiederholt wird;
wobei die Empfangsseite mit einer Funkrufmodus-Konfigurationssignalisierung und einer Auslöserzustand-Konfigurationssignalisierung durch die Übertragungsseite konfiguriert ist; **dadurch gekennzeichnet, dass**
zwei Zustände der 1-Bit-Binärfunkrufmodus-Konfigurationssignalisierung den Wobbelmodus bzw. den Auslösermodus angeben und zwei Zustände der 1-Bit-Binärauslöserzustand-Konfigurationssignalisierung einen Auslöserzustand bzw. einen Nicht-Auslöserzustand angeben; und dass
in einem Fall, in dem ein Bit der Funkrufmodus-Konfigurationssignalisierung "0" durch die Empfangsseite empfangen wird, der Funkrufmodus der Empfangsseite als der Wobbelmodus bestimmt wird, und in einem Fall, in dem ein Bit der Funkrufmodus-Konfigurationssignalisierung "1" durch die Empfangsseite empfangen wird, der Funkrufmodus der Empfangsseite als der Auslösermodus bestimmt wird.

11. Verfahren nach Anspruch 10, wobei das Empfangen der Funkrufnachricht gemäß dem Funkrufmodus, der durch die Übertragungsseite für die Empfangsseite bestimmt wird, Folgendes umfasst:
Empfangen der Funkrufnachricht gemäß einem ersten Funkrufmodus, der durch die Übertragungsseite konfiguriert ist, wobei der erste Funkrufmodus mindestens einen von Folgenden umfasst: den Wobbelmodus, den Auslösermodus oder den Kombinationsmodus.

12. Verfahren nach Anspruch 10, wobei das Empfangen der Funkrufnachricht gemäß dem Funkrufmodus, der durch die Übertragungsseite für die Empfangsseite bestimmt wird, Folgendes umfasst:
Empfangen der Funkrufnachricht gemäß einem voreingestellten zweiten Funkrufmodus zwischen der Übertragungsseite und der Empfangsseite.

13. Verfahren nach Anspruch 10, wobei das Empfangen der Funkrufnachricht gemäß dem Funkrufmodus, der durch die Übertragungsseite für die Empfangsseite bestimmt wird, Folgendes umfasst:
Empfangen der Funkrufnachricht gemäß einem zwischen der Übertragungsseite und der Empfangsseite verwendeten anfänglichen Funkrufmodus, Empfangen der Funkrufnachricht gemäß einer durch die Übertragungsseite für die Empfangsseite angegebenen Funkrufmodusumschaltung;
wobei der anfängliche Funkrufmodus durch die Übertragungsseite für die Empfangsseite konfiguriert ist; oder der anfängliche Funkrufmodus durch die Übertragungsseite und die Empfangsseite voreingestellt ist.

14. Funkrufvorrichtung (2), umfassend:
eine Konfigurationseinheit, die dazu konfiguriert ist, eine Funkrufmodus-Konfigurationssignalisierung und eine Auslöserzustand-Konfigurationssignalisierung für eine Empfangsseite zu konfigurieren;
eine Bestimmungseinheit (21), die dazu konfiguriert ist, einen Funkrufmodus für die Empfangsseite zu bestimmen, wobei der Funkrufmodus mindestens einen von Folgenden umfasst: einen Wobbelmodus, einen Auslösermodus oder einen Kombinationsmodus, wobei der Wobbelmodus einen Funkrufmodus umfasst, wobei Funkrufinformationen wiederholt mit allen Trägern der Übertragungsseite übertragen werden, der Auslösermodus einen Funkrufmodus umfasst, wobei die Übertragungsseite auslöst, dass die Empfangsseite einen verfügbaren Downlink-Träger im Voraus meldet, und die Übertragungsseite Funkrufinformationen gemäß dem empfangenen verfügbaren Downlink-Träger, der durch das Empfangsende gemeldet wird, überträgt und der Kombinationsmodus einen Funkrufmodus umfasst, wobei eine Übertragung von Funkrufinformationen in einem omnidirektionalen Modus oder einem Übertragungsmodus eines Einzelfrequenznetzwerks (SFN) wiederholt wird; **dadurch gekennzeichnet, dass**
zwei Zustände der 1-Bit-Binärfunkrufmodus-Konfigurationssignalisierung den Wobbelmodus bzw. den Auslösermodus angeben und zwei Zustände der 1-Bit-Binärauslöserzustand-Konfigurationssignalisierung einen Auslöserzustand bzw. einen Nicht-Auslöserzustand angeben; und dass
in einem Fall, in dem ein Bit der Funkrufmodus-Konfigurationssignalisierung "0" durch die Empfangsseite empfangen wird, der Funkrufmodus der Empfangsseite als der Wobbelmodus bestimmt wird, und in einem Fall, in dem ein Bit der Funkrufmodus-Konfigurationssignalisierung "1" durch die Empfangsseite empfangen wird, der Funkrufmodus der Empfangsseite als der Auslösermodus bestimmt wird.

15. Funkrufvorrichtung (3), umfassend:
eine Empfangseinheit (31), die dazu konfiguriert ist, eine Funkrufnachricht gemäß einem Funkrufmodus, der durch eine Übertragungsseite für eine Empfangsseite bestimmt wird, zu empfangen, wobei der Funkrufmodus mindestens einen von Folgenden umfasst: einen Wobbelmodus, einen Auslösermodus oder einen Kombinationsmodus, wobei der Wobbelmodus einen Funkrufmodus umfasst, wobei Funkrufinformationen wiederholt mit allen Trägern der Übertragungsseite übertragen werden, der Auslösermodus einen Funkrufmodus umfasst, wobei die Übertragungsseite auslöst, dass die Empfangsseite einen verfügbaren Downlink-Träger im Voraus meldet, und die Übertragungsseite Funkrufinformationen gemäß dem empfangenen verfügbaren Downlink-Träger, der durch das Empfangsende gemeldet wird, überträgt und der Kombinationsmodus einen Funkrufmodus umfasst, wobei eine Übertragung von Funkrufinformationen in einem omnidirektionalen Modus oder einem Übertragungsmodus eines Einzelfrequenznetzwerks (SFN) wiederholt wird;
wobei die Empfangsseite mit einer Funkrufmodus-Konfigurationssignalisierung und einer Auslöserzustand-Konfigurationssignalisierung durch die Übertragungsseite konfiguriert ist; **dadurch gekennzeichnet, dass**
zwei Zustände der 1-Bit-Binärfunkrufmodus-Konfigurationssignalisierung den Wobbelmodus bzw. den Auslösermodus angeben und zwei Zustände der 1-Bit-Binärauslöserzustand-Konfigurationssignalisierung einen Auslöserzustand bzw. einen Nicht-Auslöserzustand angeben; und dass
in einem Fall, in dem ein Bit der Funkrufmodus-Konfigurationssignalisierung "0" durch die Empfangsseite empfangen wird, der Funkrufmodus der Empfangsseite als der Wobbelmodus bestimmt wird, und in einem Fall, in dem ein Bit der Funkrufmodus-Konfigurationssignalisierung "1" durch die Empfangsseite empfangen wird, der Funkrufmodus der Empfangsseite als der Auslösermodus bestimmt wird.

## Revendications

1. Procédé de radiomessagerie, comprenant :
la configuration (101), par une extrémité de transmission, d'une signalisation de configuration de mode de radiomessagerie et d'une signalisation de configuration d'état de déclenchement vers une extrémité de réception ;
la détermination, par l'extrémité de transmission, d'un mode de radiomessagerie pour l'extrémité de réception, dans lequel le mode de radiomessagerie comprend au moins l'un de : un mode de balayage, un mode de déclenchement, ou un mode de combinaison, dans lequel le mode de balayage comprend un mode de radiomessagerie dans lequel des informations de radiomessagerie sont transmises de manière répétée avec tous les faisceaux de l'extrémité de transmission, le mode de déclenchement comprend un mode de radiomessagerie dans lequel l'extrémité de transmission déclenche l'extrémité de réception pour rapporter à l'avance un faisceau de liaison descendante disponible, et l'extrémité de transmission transmet des informations de radiomessagerie selon le faisceau de liaison descendante disponible reçu rapporté par l'extrémité de réception, et le mode de combinaison comprend un mode de radiomessagerie dans lequel une transmission d'informations de radiomessagerie est répétée dans un mode omnidirectionnel, ou un mode de transmission de réseau à fréquence unique, SFN ; **caractérisé en ce que**,
deux états de signalisation de configuration de mode de pagination binaire à 1 bit indiquent respectivement le mode de balayage et le mode de déclenchement, et deux états de signalisation de configuration d'état de déclenchement binaire à 1 bit indiquent respectivement un état de déclenchement et un état de non-déclenchement ; et
dans le cas où un bit de la signalisation de configuration de mode de radiomessagerie « 0 » est reçu par l'extrémité de réception, le mode de radiomessagerie de l'extrémité de réception est déterminé comme le mode de balayage, et dans le cas où un bit de la signalisation de configuration de mode de radiomessagerie « 1 » est reçu par l'extrémité de réception, le mode de radiomessagerie de l'extrémité de réception est déterminé comme le mode de déclenchement.

2. Procédé selon la revendication 1, dans lequel la détermination, par l'extrémité de transmission, du mode de radiomessagerie pour l'extrémité de réception comprend :
la configuration, par l'extrémité de transmission, d'un premier mode de radiomessagerie pour l'extrémité de réception, dans lequel le premier mode de radiomessagerie comprend au moins l'un de : le mode de balayage, le mode de déclenchement, ou le mode de combinaison.

3. Procédé selon la revendication 1, dans lequel la détermination, par l'extrémité de transmission, du mode de radiomessagerie pour l'extrémité de réception comprend :
le préréglage d'un second mode de radiomessagerie entre l'extrémité de transmission et l'extrémité de réception.

4. Procédé selon la revendication 1, dans lequel la détermination, par l'extrémité de transmission, du mode de radiomessagerie pour l'extrémité de réception comprend :
l'utilisation d'un mode de radiomessagerie initial entre l'extrémité de transmission et l'extrémité de réception, et l'indication, par l'extrémité de transmission, à l'extrémité de réception, du changement de mode de radiomessagerie.

5. Procédé selon la revendication 2, dans lequel le premier mode de radiomessagerie est configuré par l'intermédiaire d'une signalisation de configuration de mode de radiomessagerie, et la signalisation de configuration de mode de radiomessagerie comprend au moins l'un de : une signalisation de configuration de mode de radiomessagerie spécifique à l'équipement utilisateur, spécifique à l'UE ; une signalisation de configuration de mode de radiomessagerie spécifique à l'occasion de radiomessagerie, spécifique à la PO ; une signalisation de configuration de mode de radiomessagerie spécifique à la trame de radiomessagerie, spécifique à la PF ; une signalisation de configuration de mode de radiomessagerie spécifique au point de transmission-réception, spécifique au TRP ; une signalisation de configuration de mode de radiomessagerie spécifique à la cellule, ou une signalisation de configuration de mode de radiomessagerie spécifique à la zone de piste, spécifique à la TA,
dans lequel la signalisation de configuration de mode de radiomessagerie comprend : l'indication du mode de balayage, du mode de déclenchement et du mode de combinaison en utilisant trois états d'un nombre binaire à A bits, où un autre état est réservé, et A est un nombre naturel ; ou l'indication de deux quelconques du mode de balayage, du mode de déclenchement, ou du mode de combinaison en utilisant deux états d'un nombre à B bits, où B est un nombre naturel.

6. Procédé selon la revendication 2, dans lequel, en réponse à la détermination que le premier mode de radiomessagerie est le mode de balayage ou le mode de combinaison, le procédé comprend également :
la configuration d'un état d'économie d'énergie par l'intermédiaire d'une signalisation de configuration d'état d'économie d'énergie, dans lequel la signalisation de configuration d'état d'économie d'énergie comprend au moins l'un de : une signalisation de configuration d'état d'économie d'énergie spécifique à l'UE, une signalisation de configuration d'état d'économie d'énergie spécifique à la PO, une signalisation de configuration d'état d'économie d'énergie spécifique à la PF, une signalisation de configuration d'état d'économie d'énergie spécifique au TRP, une signalisation de configuration d'état d'économie d'énergie spécifique à la cellule, ou une signalisation de configuration d'état d'économie d'énergie spécifique à la TA,
dans lequel l'état d'économie d'énergie comprend : l'indication d'un état d'économie d'énergie et d'un état de non-économie d'énergie en utilisant deux états d'un nombre binaire à C bits, et C est un nombre naturel.

7. Procédé selon la revendication 2, dans lequel le mode de déclenchement est configuré par l'intermédiaire d'une signalisation de configuration d'état de déclenchement, et la signalisation de configuration d'état de déclenchement comprend au moins l'un de : une signalisation de configuration d'état de déclenchement spécifique à l'UE, une signalisation de configuration d'état de déclenchement spécifique à la PO, une signalisation de configuration d'état de déclenchement spécifique à la PF, une signalisation de configuration d'état de déclenchement spécifique au TRP, une signalisation de configuration d'état de déclenchement spécifique à la cellule, ou une signalisation de configuration d'état de déclenchement spécifique à la TA ;
dans lequel la signalisation de configuration d'état de déclenchement comprend : l'indication d'un état de déclenchement et d'un état de non-déclenchement en utilisant deux états d'un nombre binaire à D bits, et D est un nombre naturel ;
ou
dans lequel une occasion de transmission de la signalisation de configuration d'état de déclenchement et une occasion de radiomessagerie, PO, sont identiques ; ou l'occasion de transmission de la signalisation de configuration d'état de déclenchement est en avance sur la PO ;
ou
dans lequel, dans l'état de déclenchement, après que l'extrémité de réception rapporte un faisceau sélectionné, un canal de trafic est utilisé pour transmettre un message de radiomessagerie ; ou dans l'état de déclenchement, après que l'extrémité de réception rapporte le faisceau sélectionné, un message de réponse d'accès aléatoire en liaison descendante, RAR, correspondant à l'accès aléatoire en liaison montante est utilisé pour transmettre le message de radiomessagerie.

8. Procédé selon la revendication 4, dans lequel l'utilisation du mode de radiomessagerie initial entre l'extrémité de transmission et l'extrémité de réception comprend :
la configuration du mode de radiomessagerie initial pour l'extrémité de réception par l'intermédiaire de l'extrémité de transmission ; ou
le préréglage, par l'extrémité de transmission et l'extrémité de réception, du mode de radiomessagerie initial.

9. Procédé selon la revendication 4 ou 8, dans lequel le changement de mode de radiomessagerie est indiqué par une signalisation de changement de mode de radiomessagerie, et la signalisation de changement de mode de radiomessagerie comprend au moins l'un de : une signalisation de changement de mode de radiomessagerie spécifique à l'UE, une signalisation de changement de mode de radiomessagerie spécifique à la PO, une signalisation de changement de mode de radiomessagerie spécifique à la PF, une signalisation de changement de mode de radiomessagerie spécifique au TRP, une signalisation de changement de mode de radiomessagerie spécifique à la cellule, ou une signalisation de changement de mode de radiomessagerie spécifique à la TA,
dans lequel la signalisation de changement de mode de radiomessagerie comprend : l'indication du maintien du mode de radiomessagerie initial, le changement vers un premier mode de radiomessagerie non initial et le changement vers un second mode de radiomessagerie non initial en utilisant trois états d'un binaire à E bits, où un autre état est réservé, et E est un nombre naturel ; ou dans lequel la signalisation de changement de mode de radiomessagerie comprend : l'indication du maintien du mode de radiomessagerie initial et le changement vers un mode de radiomessagerie non initial en utilisant deux états d'un binaire à F bits, où F est un nombre naturel.

10. Procédé de radiomessagerie, comprenant :
la réception d'un message de radiomessagerie selon un mode de radiomessagerie déterminé par une extrémité de transmission pour une extrémité de réception, dans lequel le mode de radiomessagerie comprend au moins l'un de : un mode de balayage, un mode de déclenchement, ou un mode de combinaison, dans lequel le mode de balayage comprend un mode de radiomessagerie dans lequel des informations de radiomessagerie sont transmises de manière répétée avec tous les faisceaux de l'extrémité de transmission, le mode de déclenchement comprend un mode de radiomessagerie dans lequel l'extrémité de transmission déclenche l'extrémité de réception pour rapporter à l'avance un faisceau de liaison descendante disponible, et l'extrémité de transmission transmet des informations de radiomessagerie selon le faisceau de liaison descendante disponible reçu rapporté par l'extrémité de réception, et le mode de combinaison comprend un mode de radiomessagerie dans lequel une transmission d'informations de radiomessagerie est répétée dans un mode omnidirectionnel, ou un mode de transmission de réseau à fréquence unique, SFN ;
dans lequel l'extrémité de réception est configurée avec une signalisation de configuration de mode de radiomessagerie et une signalisation de configuration d'état de déclenchement par l'extrémité de transmission ; **caractérisé en ce que**,
deux états de signalisation de configuration de mode de radiomessagerie binaire à 1 bit indiquent respectivement le mode de balayage et le mode de déclenchement, et deux états de signalisation de configuration d'état de déclenchement binaire à 1 bit indiquent respectivement un état de déclenchement et un état de non-déclenchement ; et
dans le cas où un bit de la signalisation de configuration de mode de radiomessagerie « 0 » est reçu par l'extrémité de réception, le mode de radiomessagerie de l'extrémité de réception est déterminé comme le mode de balayage, et dans le cas où un bit de la signalisation de configuration de mode de radiomessagerie « 1 » est reçu par l'extrémité de réception, le mode de radiomessagerie de l'extrémité de réception est déterminé comme le mode de déclenchement.

11. Procédé selon la revendication 10, dans lequel la réception du message de radiomessagerie selon le mode de radiomessagerie déterminé par l'extrémité de transmission pour l'extrémité de réception comprend :
la réception du message de radiomessagerie selon un premier mode de radiomessagerie configuré par l'extrémité de transmission, dans lequel le premier mode de radiomessagerie comprend au moins l'un de : le mode de balayage, le mode de déclenchement, ou le mode de combinaison.

12. Procédé selon la revendication 10, dans lequel la réception du message de radiomessagerie selon le mode de radiomessagerie déterminé par l'extrémité de transmission pour l'extrémité de réception comprend :
la réception du message de radiomessagerie selon un second mode de radiomessagerie préréglé entre l'extrémité de transmission et l'extrémité de réception.

13. Procédé selon la revendication 10, dans lequel la réception du message de radiomessagerie selon le mode de radiomessagerie déterminé par l'extrémité de transmission pour l'extrémité de réception comprend :
la réception du message de radiomessagerie selon un mode de radiomessagerie initial utilisé entre l'extrémité de transmission et l'extrémité de réception, la réception du message de radiomessagerie selon le changement de mode de radiomessagerie indiqué par l'extrémité de transmission à l'extrémité de réception ;
dans lequel le mode de radiomessagerie initial est configuré par l'extrémité de transmission à l'extrémité de réception ; ou le mode de radiomessagerie initial est préréglé par l'extrémité de transmission et l'extrémité de réception.

14. Appareil de radiomessagerie (2), comprenant :
une unité de configuration, configurée pour configurer une signalisation de configuration de mode de radiomessagerie et déclencher la signalisation de configuration d'état à une extrémité de réception ;
une unité de détermination (21), configurée pour déterminer un mode de radiomessagerie pour l'extrémité de réception, dans lequel le mode de radiomessagerie comprend au moins l'un de : un mode de balayage, un mode de déclenchement, ou un mode de combinaison, dans lequel le mode de balayage comprend un mode de radiomessagerie dans lequel des informations de radiomessagerie sont transmises de manière répétée avec tous les faisceaux de l'extrémité de transmission, le mode de déclenchement comprend un mode de radiomessagerie dans lequel l'extrémité de transmission déclenche l'extrémité de réception pour rapporter à l'avance un faisceau de liaison descendante disponible, et l'extrémité de transmission transmet des informations de radiomessagerie selon le faisceau de liaison descendante disponible reçu rapporté par l'extrémité de réception, et le mode de combinaison comprend un mode de radiomessagerie dans lequel une transmission d'informations de radiomessagerie est répétée dans un mode omnidirectionnel, ou un mode de transmission de réseau à fréquence unique, SFN ; **caractérisé en ce que**,
deux états de signalisation de configuration de mode de radiomessagerie binaire à 1 bit indiquent respectivement le mode de balayage et le mode de déclenchement, et deux états de signalisation de configuration d'état de déclenchement binaire à 1 bit indiquent respectivement un état de déclenchement et un état de non-déclenchement ; et
dans le cas où un bit de la signalisation de configuration de mode de radiomessagerie « 0 » est reçu par l'extrémité de réception, le mode de radiomessagerie de l'extrémité de réception est déterminé comme le mode de balayage, et dans le cas où un bit de la signalisation de configuration de mode de radiomessagerie « 1 » est reçu par l'extrémité de réception, le mode de radiomessagerie de l'extrémité de réception est déterminé comme le mode de déclenchement.

15. Appareil de radiomessagerie (3), comprenant :
une unité de réception (31), configurée pour recevoir un message de radiomessagerie selon un mode de radiomessagerie déterminé par une extrémité de transmission pour une extrémité de réception, dans lequel le mode de radiomessagerie comprend au moins l'un de : un mode de balayage, un mode de déclenchement, ou un mode de combinaison, dans lequel le mode de balayage comprend un mode de radiomessagerie dans lequel des informations de radiomessagerie sont transmises de manière répétée avec tous les faisceaux de l'extrémité de transmission, le mode de déclenchement comprend un mode de radiomessagerie dans lequel l'extrémité de transmission déclenche l'extrémité de réception pour rapporter à l'avance un faisceau de liaison descendante disponible, et l'extrémité de transmission transmet des informations de radiomessagerie selon le faisceau de liaison descendante disponible reçu rapporté par l'extrémité de réception, et le mode de combinaison comprend un mode de radiomessagerie dans lequel une transmission d'informations de radiomessagerie est répétée dans un mode omnidirectionnel, ou un mode de transmission de réseau à fréquence unique, SFN ;
dans lequel l'extrémité de réception est configurée avec une signalisation de configuration de mode de radiomessagerie et une signalisation de configuration d'état de déclenchement par l'extrémité de transmission ; **caractérisé en ce que**,
deux états de signalisation de configuration de mode de radiomessagerie binaire à 1 bit indiquent respectivement le mode de balayage et le mode de déclenchement, et deux états de signalisation de configuration d'état de déclenchement binaire à 1 bit indiquent respectivement un état de déclenchement et un état de non-déclenchement ; et
dans le cas où un bit de la signalisation de configuration de mode de radiomessagerie « 0 » est reçu par l'extrémité de réception, le mode de radiomessagerie de l'extrémité de réception est déterminé comme le mode de balayage, et dans le cas où un bit de la signalisation de configuration de mode de radiomessagerie « 1 » est reçu par l'extrémité de réception, le mode de radiomessagerie de l'extrémité de réception est déterminé comme le mode de déclenchement.
